# EUROPÄISCHE PATENTANMELDUNG

(11) **EP 4 789 856 A1**
(43) Veröffentlichungstag der Anmeldung: **12.08.2026**
(21) Anmeldenummer: 26157101.2
(22) Anmeldetag: 06.02.2026
(51) Int. Cl.: B29D 11/00

(54) **MASCHINE ZUR SPANENDEN BEARBEITUNG VON OPTISCHEN WERKSTÜCKEN AUS KUNSTSTOFF, INSBESONDERE BRILLENLINSEN**

(30) Priorität: 07.02.2025 DE 102025104657
(71) Anmelder: Satisloh AG, 6340 Baar (CH)
(72) Erfinder: Schäfer, Holger, 35789 Weilmünster (DE); Claar, Johannes, 35085 Ebsdorfergrund (DE); Lautz, Martin, 35580 Nauborn (DE)
(74) Vertreter: Oppermann, Mark

(57) **Zusammenfassung**

Eine Maschine (10) zur spanenden Bearbeitung von insbesondere Brillenlinsen aus Kunststoff, mit zwei Werkstückflächen und einem Werkstückrand dazwischen, umfasst eine erste Bearbeitungsstation (15) für eine spanende Bearbeitung einer Brillenlinse am Werkstückrand durch ein erstes Werkzeug, eine zweite Bearbeitungsstation (16) für eine nasse spanende Bearbeitung der Brillenlinse an einer der Werkstückflächen durch ein zweites Werkzeug, und eine funktional zwischen den Bearbeitungsstationen angeordnete Bewegungseinrichtung (17) zum Positionieren eines Werkstück-Haltekopfs an der jeweiligen Bearbeitungsstation, der das Werkstück ohne Blockstück zu halten vermag. Dabei weisen die Bearbeitungsstationen voneinander getrennte erste und zweite Arbeitsräume auf, die jeweils gegenüber der Umgebung gekapselt sind. Die erste Bearbeitungsstation hat ferner ein den ersten Arbeitsraum eigens begrenzendes Gehäuse und ist für eine im Wesentlichen trockene Bearbeitung des Werkstücks am Werkstückrand angepasst.

## Beschreibung

Die vorliegende Erfindung bezieht sich allgemein auf eine Maschine zur spanenden Bearbeitung von optischen Werkstücken aus Kunststoff, die jeweils zwei Werkstückflächen und einen Werkstückrand dazwischen aufweisen, gemäß dem Oberbegriff des Patentanspruchs 1. Insbesondere bezieht sich die Erfindung auf eine Maschine zur spanenden Bearbeitung von Brillenlinsen aus Kunststoff, wie etwa Polycarbonat, CR39 oder sogenannten "High Index" Materialien. Derartige Brillenlinsen werden in sogenannten "RX-Werkstätten", d.h. Produktionsstätten zur Fertigung von individuellen Brillenlinsen nach Rezept in sehr großem Umfang hergestellt.

Die hier beschriebene Maschine eignet sich beispielsweise sehr gut für einen Einsatz in Kombination mit bzw. in Verfahren zur spanenden Bearbeitung von Brillenlinsen, die keine sogenannten "Blockstücke" zum Haltern der Brillenlinsen während der Bearbeitung verwenden, wie sie in den Druckschriften WO 2023/046937 A1, WO 2023/073249 A1 und WO 2023/110939 A1 beschrieben sind, und/oder zur Verwendung mit einer Werkstück-Aufnahme, wie sie Gegenstand der Druckschriften WO 2023/ 066824 A1, EP 4 454 810 A1 und EP 4 450 220 A1 ist, und/oder mit einem Werkstück-Haltekopf, wie er ebenfalls in der Druckschrift WO 2023/073249 A1 offenbart ist. Dabei bildet die hier beschriebene Maschine insbesondere die kombinierten CNC-Fräs-Drehmaschinen weiter, die in den Druckschriften WO 2023/066824 A1 und WO 2023/073249 A1 gezeigt sind, aus denen jeweils die Merkmale des Oberbegriffs des Patentanspruchs 1 bekannt sind. Hinsichtlich der hier in Rede stehenden Verfahrens- und Vorrichtungsdetails wird an dieser Stelle zunächst ausdrücklich auf die diesbezüglichen Erläuterungen in den vorgenannten Druckschriften Bezug genommen.

### STAND DER TECHNIK

In der oben ersterwähnten Druckschrift WO 2023/046937 A1 wird bereits ausführlich beschrieben, welche Prozessschritte herkömmlicherweise in RX-Werkstätten bei der industriellen Fertigung von Brillenlinsen durchlaufen werden, so dass das übliche Vorgehen an dieser Stelle nur kurz umrissen werden soll. Ausgangsprodukt bei der industriellen Fertigung von Brillenlinsen ist ein halbfertiger Brillenlinsenrohling, auch "Blank" genannt, der eine bereits fertigbearbeitete, spritzgusstechnisch vorbereitete oder auf andere Weise vorgeformte optisch wirksame Fläche aufweist und an seiner anderen optisch wirksamen Fläche und dem Rand zwischen den optischen wirksamen Flächen zu einer fertigen Brillenlinse zu bearbeiten ist.

Nach einem Schutz der vorgeformten optisch wirksamen Fläche mittels einer Schutzfolie oder eines Schutzlacks erfolgt das sogenannte "Blocken" des jeweiligen Brillenlinsenrohlings, der dabei mit einem geeigneten "Blockstück", z.B. einem Blockstück gemäß der deutschen Norm DIN 58766 verbunden wird. Beim Blocken werden zuerst Position und ggf. Form des Brillenlinsenrohlings messtechnisch bestimmt, bevor der Brillenlinsenrohling dann in sechs Freiheitsgraden relativ zu dem Blockstück positioniert wird, so dass das Blockstück eine vorgegebene Position gegenüber der geschützten, vorgeformten Fläche des Brillenlinsenrohlings einnimmt. Anschließend erfolgt die Fixierung dieser eingestellten Position durch Auffüllen des Raums zwischen Blockstück und Brillenlinsenrohling mit einem herkömmlichen geschmolzenen Material ("Alloy" oder Wachs, siehe z.B. die Druckschrift EP 1 593 458 A2) oder alternativ mittels eines geeigneten thermoplastischen, duroplastischen oder elastomeren Kunststoffs oder Klebstoffs (siehe z.B. die Druckschriften DE 10 2007 007 161 A1, EP 2 011 604 A1, WO 2009/135689 A1). Nach Erstarren bzw. Aushärten des Füllmaterials stellt das Blockstück eine Aufnahme oder Maschinenschnittstelle zur Bearbeitung des Brillenlinsenrohlings dar, die nachfolgend bei mehreren Bearbeitungsvorgängen in verschiedenen Maschinen an der Brillenlinse verbleibt, um Letztere dabei drehend antreiben zu können und in stets definierter Lage zuverlässig zu halten.

Im nächsten Schritt, dem sogenannten "Generieren", erhält die vorher noch nicht bearbeitete optisch wirksame Fläche des jeweiligen Brillenlinsenrohlings in einer speziellen Bearbeitungsmaschine, auch "Generator" genannt (siehe z.B. die Druckschriften EP 1 719 585 A2 und EP 2 011 603 A1), durch spanende (Vor)Bearbeitung - bei Kunststoff i.d.R. Fräsen und/oder Drehen mit geometrisch bestimmter Schneide - ihre Makrogeometrie, d.h. die optisch aktive Form gemäß Rezept. Dabei wird der geblockte Brillenlinsenrohling mittels des Blockstücks an einer drehend angetriebenen Werkstückspindel gehalten. Das Generieren umfasst regelmäßig wenigstens zwei Teilschritte (siehe z.B. die Druckschrift EP 1 203 626 B1), nämlich eine Randvorbearbeitung, auch Vorranden oder "Cribbing" genannt, bei welcher der Rand des Brillenlinsenrohlings vom sogenannten "Rohdurchmesser" auf den sogenannten "Fertigdurchmesser" bearbeitet wird - bei Kunststoff etwa mittels eines Tellerfräsers (vgl. z.B. die Druckschrift EP 0 758 571 B1) - und eine sich daran anschließende Flächenbearbeitung. Letztere kann bei Kunststoff mit (wenigstens) einem Fräsergang über die Fläche beginnen, wonach die Hauptmenge des zu entfernenden Rohlingsmaterials bereits abgetragen ist, gefolgt zumeist von einer "unrunden" Drehbearbeitung unter Zuhilfenahme einer sogenannten "Fast-Tool"-Anordnung (siehe z.B. die Druckschrift EP 1 779 967 A2) zum reziprozierenden Antrieb einer Diamant-Drehschneide, um (auch) nichtrotationssymmetrische Flächenabschnitte - z.B. Freiformflächen bei Gleitsichtbrillen - am Halbzeug anzuarbeiten. Voraussetzung für die angesprochene Randvorbearbeitung mittels Fräser ist, dass das an der Frontseite des Brillenlinsenrohlings temporär angebrachte Blockstück einen maximalen Durchmesser kleiner dem Fertigdurchmesser des Werkstücks aufweist, da es ansonsten zu einer Kollision zwischen Fräswerkzeug und Blockstück kommen würde.

Sodann erfolgt die allgemein als "Polieren" bezeichnete (mikro) spanende Feinbearbeitung der Brillenlinsen, bei der die vorbearbeitete optisch wirksame Fläche des jeweiligen Halbzeugs die gewünschte Mikrogeometrie (Oberflächengüte) erhält, und zwar mittels geometrisch unbestimmter Schneide. Hierfür wird das spanend vorbearbeitete, geblockte Halbzeug aus dem Generator entnommen und in einer Feinbearbeitungs- bzw. Poliermaschine weiterbearbeitet (siehe beispielsweise die Druckschrift EP 2 308 644 A2). Dabei erfolgt die Positionierung und Fixierung des Halbzeugs in der Poliermaschine ebenfalls mittels des Blockstücks (siehe z.B. die Druckschrift EP 1 473 116 A1). Bei der Polierbearbeitung wird unter Zugabe eines flüssigen, mit abrasiven Partikeln versehenen Poliermittels vermittels eines flexiblen Polierwerkzeugs bzw. -tellers (siehe etwa die Druckschriften EP 1 698 432 A2 und WO 2016/058661 A1) in definierten Bahnen über die vorbearbeitete Fläche gefahren, um die Oberflächenrauigkeit zu verringern.

Als optionaler Prozessschritt erfolgt das Markieren des Halbzeugs, wobei etwa mittels eines Laserstrahls oder mechanisch mittels eines Gravierstichels (siehe z.B. die Druckschrift EP 1 916 060 B1) beispielsweise zwei kleine Kreise auf der rückseitigen Fläche des Halbzeugs erzeugt werden. Dies ist etwa bei Freiformflächen notwendig, um über die eingebrachten Markierungen die Lage des Halbzeugs in späteren Prozessschritten sicher zu finden. Da hier eine hohe Genauigkeit in der Positionierung gefordert ist, erfolgt auch beim Markieren die Positionierung und Fixierung des Halbzeugs vermittels des Blockstücks.

Erst nach dieser Bearbeitung wird das Halbzeug vom Blockstück getrennt. Das sogenannte "Abblocken" erfolgt beispielsweise im Falle der vorerwähnten Klebeverbindung mittels eines von einer Düse abgegebenen Hochdruck-Wasserstrahls, der auf einer Randstelle zwischen Blockstück und Halbzeug auftrifft, um das Halbzeug vom Blockstück durch Aufbringung hydraulischer Kräfte zu lösen (siehe z.B. die Druckschriften WO 2011/042091 A1 und WO 2011/107227 A1). In der Folge liegt nun das bearbeitete Halbzeug einzeln vor, das abgetrennte Blockstück wird gereinigt und an den Prozessschritt Blocken zurückgeführt.

In der weiteren Bearbeitung wird das Halbzeug nach Reinigung optional an seiner Front- und/oder Rückseite zur Erzielung zusätzlicher Wirkungen - Erhöhung der Kratzfestigkeit durch Hartbeschichtung, Antireflexionseigenschaften, Farbe, Verspiegelung, hydrophobe Eigenschaften, etc. - beschichtet.

Als finaler Prozessschritt wird schließlich das sogenannte "Edgen" durchgeführt, bei dem das Halbzeug am Rand zur Einpassung in ein gewünschtes Brillengestell erneut bearbeitet wird, so dass es die Form der jeweiligen Brillenfassung erhält. Da das Halbzeug nun nicht mehr auf dem Blockstück fixiert ist, muss hier die Position erneut festgestellt werden (beispielsweise anhand der vorerwähnten Markierungen), bevor das Halbzeug geeignet fixiert und in einem sogenannten "Edger" als Randbearbeitungsvorrichtung (siehe z.B. die Druckschrift EP 1 243 380 A2) im Hinblick auf seine Randform und Befestigung im Brillengestell final bearbeitet werden kann.

Die insoweit umrissene Prozesskette aus dem Stand der Technik beinhaltet mit den Schritten "Blocken" und "Abblocken" zwei Abläufe, die notwendige Hilfsprozesse darstellen, selbst aber den Wert der hergestellten Brillenlinse nicht steigern. Wünschenswert wäre also eine Prozesskette, die ohne diese Hilfsprozesse auskommt, mithin eine "blocklose" Bearbeitung der Werkstücke gestattet, d.h. eine Werkstück-Bearbeitung ohne die Verwendung von - vorher eigens am Werkstück anzubringenden und danach vom Werkstück wieder zu entfernenden - Blockstücken zum Haltern der Werkstücke bei der Bearbeitung.

Zu insbesondere diesem Zweck wird in der eingangs erwähnten Druckschrift WO 2023/046937 A1 ein Verfahren zur spanenden Bearbeitung von optischen Werkstücken, insbesondere Brillenlinsen aus Kunststoff vorgeschlagen, bei dem ausgehend von einem Rohling ein Halbzeug mit vorbestimmten Flächengeometrien an einer Frontseite und einer davon abgewandten Rückseite und mit einem konturierten Rand von vorbestimmter Randdicke zwischen der Frontseite und der Rückseite ausgebildet wird. Das dort vorgeschlagene Verfahren umfasst die folgenden, in der angegebenen Reihenfolge ablaufenden Hauptschritte: i) Bereitstellen des Rohlings, der eine Rohlingsdicke besitzt, an der Frontseite bereits die vorbestimmte Flächengeometrie aufweisen kann und wenigstens an der Rückseite sowie dem Rand zu bearbeiten ist; ii) blockloses Aufnehmen des Rohlings an der Rückseite zum abgestützten Halten des Werkstücks; iii) Bearbeiten des Rohlings an der Frontseite mittels eines ersten Werkzeugs, zur Ausbildung einer umlaufenden Nut oder Stufe mit einer Tiefe, welche größer oder gleich der Randdicke des auszubildenden Halbzeugs und kleiner als die Rohlingsdicke ist, oder eines umlaufenden Einstichs, der wenigstens teilweise eine Tiefe gleich der Rohlingsdicke besitzt, so dass am Werkstück eine Umfangsfläche verbleibt, die den konturierten Rand des auszubildenden Halbzeugs definiert; iv) Aufnehmen des Werkstücks an der Frontseite zum abgestützten Halten des Werkstücks; und v) Bearbeiten des Werkstücks an der Rückseite mittels wenigstens eines zweiten Werkzeugs, zur Ausbildung des Halbzeugs mit der vorbestimmten Flächengeometrie an der Rückseite.

Dadurch, dass im Hauptschritt iii) die Nut, die Stufe oder der Einstich auf der Frontseite des Rohlings umlaufend mit in jedem Fall einer Tiefe ausgebildet wird, die größer (gleich) der Randdicke des auszubildenden Halbzeugs ist, kommt es spätestens im Hauptschritt v), wenn an der Rückseite die vorbestimmte Flächengeometrie des Halbzeugs spanend generiert wird, zu einer vollständigen Trennung des Halbzeugs vom überschüssigen, radial äußeren Material des Rohlings. Infolge der Tiefenerstreckung der Nut, der Stufe oder des Einstichs in Dickenrichtung des Werkstücks verbleibt dabei schon im Hauptschritt iii) eine Umfangsfläche am Werkstück, die den konturierten Rand des auszubildenden Halbzeugs definiert.

Mit anderen Worten gesagt wird in dem Hauptschritt iii) des vorgeschlagenen Verfahrens eine Bearbeitung des konturierten Rands des auszubildenden Halbzeugs - sei es im Sinne eines Vorrandens oder eines Fertigrandens des Werkstücks - vorgeholt bzw. zeitlich vorgezogen, und zwar ausgehend von der Frontseite des gemäß dem Hauptschritt ii) dabei an der Rückseite blocklos aufgenommenen Rohlings, bevor das Werkstück nach dem Aufnehmen an seiner Frontseite im Hauptschritt iv) gemäß dem Hauptschritt v) an seiner Rückseite flächenbearbeitet wird. Jedenfalls nach dem Hauptschritt v) ist das generierte Halbzeug dann vollständig vom überschüssigen, radial äußeren Rohlingsmaterial getrennt, welches als Ringstück oder in Ringsegmenten als Abfallstück(en) abfällt.

Dieses im Grunde zweistufige Vorgehen - zunächst Werkstückaufnahme an der Rückseite und Bearbeitung an der Frontseite des Werkstücks nahe dem Rohlingsrand, danach Aufnahme an der Frontseite und Bearbeitung an der Rückseite des Werkstücks auch im Zentrum - mit der beanspruchten Abfolge der einzelnen Verfahrensschritte bietet bei der spanenden Bearbeitung von insbesondere Brillenlinsen aus Kunststoff bedeutende Vorteile. Diese Vorteile betreffen vornehmlich das für die Prozesssicherheit wichtige, zuverlässige Halten des Werkstücks während der eigentlichen Rand(vor)bearbeitung sowie das für die Bearbeitungsqualität relevante, vollflächige Unter- bzw. Abstützen des Werkstücks während der eigentlichen Flächenbearbeitung, wie in der Druckschrift WO 2023/046937 A1 im Einzelnen beschrieben.

Kombinierte CNC-Fräs-Drehmaschinen, die für die Durchführung des oben beschriebenen, blocklosen "Rand-vor-Fläche"-Fertigungsverfahrens für optische Werkstücke aus Kunststoff, insbesondere Brillenlinsen geeignet sind, sind in den eingangs schon erwähnten Druckschriften WO 2023/066824 A1 (Fig. 1 bis 4) und WO 2023/073249 A1 (Fig. 1 und 2) gezeigt. Allgemein gesprochen umfassen diese Maschinen eine erste Bearbeitungsstation, die für eine spanende Bearbeitung eines Werkstücks zur Formgebung des Werkstückrands durch mindestens ein erstes Werkzeug mit geometrisch bestimmter Schneide ausgestaltet ist, eine zweite Bearbeitungsstation, die für eine nasse spanende Bearbeitung des Werkstücks zur Formgebung wenigstens einer der Werkstückflächen durch mindestens ein zweites Werkzeug mit geometrisch bestimmter Schneide unter Zufuhr einer Kühlschmierflüssigkeit ausgestaltet ist, und eine funktional zwischen der ersten Bearbeitungsstation und der zweiten Bearbeitungsstation angeordnete Bewegungseinrichtung zum Positionieren eines Werkstück-Haltekopfs an der jeweiligen ersten oder zweiten Bearbeitungsstation, der angepasst ist, das Werkstück blocklos, d.h. ohne Verwendung eines am Werkstück angebrachten Blockstücks zu halten.

Während sich die oben erstgenannte Druckschrift WO 2023/066824 A1 vornehmlich damit beschäftigt, wie in diesem Fertigungsumfeld an der zweiten Bearbeitungsstation der Maschine eine Aufnahme für die Bearbeitung des Werkstücks im Einzelnen ausgestaltet werden kann, besteht ein Kern der oben zweitgenannten Druckschrift WO 2023/073249 A1 darin, mögliche Details eines für dieses Fertigungsumfeld besonders geeigneten Werkstück-Haltekopfs anzugeben, der an der Bewegungseinrichtung zwischen der ersten Bearbeitungsstation und der zweiten Bearbeitungsstation der Maschine vorgesehen ist. In beiden Fällen umfasst die erste Bearbeitungsstation eine Frässpindel mit einem Fingerfräser, die im Bereich eines die zweite Bearbeitungsstation aufnehmenden Arbeitsraums auf einer Oberseite eines für beide Bearbeitungsstationen gemeinsamen Maschinengestells montiert ist. Auf der Oberseite des Maschinengestells ist ferner in beiden Fällen ein 6-Achs-Knickarmroboter als Bewegungseinrichtung angeflanscht, der an seinem freien Ende den Werkstück-Haltekopf trägt und speziell zum Halten und Positionieren des Werkstücks an der Frässpindel der ersten Bearbeitungsstation sowie zur Werkstück-Beschickung der Aufnahme in der zweiten Bearbeitungsstation dient.

Wünschenswert wäre eine weitere Optimierung dieses grundsätzlich bewährten Maschinenkonzepts hinsichtlich der Prozesssicherheit bei einem möglichst hohen Werkstückdurchsatz und unter besonderer Berücksichtigung des Umstands, dass bei der Rand- und Flächenbearbeitung insgesamt ein relativ großes Volumen an unterschiedlichen Spänen bzw. Abfallstücken entsteht, die es geschickt zu entsorgen gilt.

### AUFGABENSTELLUNG

Dem insoweit geschilderten Stand der Technik gegenüber liegt der vorliegenden Erfindung also die Aufgabe zugrunde, eine alternative Maschine zur spanenden Bearbeitung von optischen Werkstücken aus Kunststoff, namentlich Brillenlinsen mit jeweils zwei Werkstückflächen und einem Werkstückrand dazwischen zu schaffen, die hinsichtlich der Prozesssicherheit bei einem möglichst hohen Werkstückdurchsatz optimiert ist und bei der auch die während der Rand- und Flächenbearbeitung entstehenden Abfälle tunlichst effizient und gut entsorgt werden können.

### DARSTELLUNG DER ERFINDUNG

Diese Aufgabe wird durch eine Maschine zur spanenden Bearbeitung von optischen Werkstücken aus Kunststoff, insbesondere Brillenlinsen, die jeweils zwei Werkstückflächen und einen Werkstückrand dazwischen aufweisen, mit den Merkmalen des Patentanspruchs 1 gelöst. Vorteilhafte oder zweckmäßige Ausgestaltungen und Weiterbildungen der Erfindung sind Gegenstand der abhängigen Patentansprüche.

Bei einer Maschine zur spanenden Bearbeitung von optischen Werkstücken aus Kunststoff, insbesondere Brillenlinsen, die jeweils zwei Werkstückflächen und einen Werkstückrand dazwischen aufweisen, umfassend wenigstens eine erste Bearbeitungsstation, die für eine spanende Bearbeitung eines Werkstücks zur Formgebung des Werkstückrands durch mindestens ein erstes Werkzeug mit geometrisch bestimmter Schneide ausgestaltet ist, wenigstens eine zweite Bearbeitungsstation, die für eine nasse spanende Bearbeitung des Werkstücks zur Formgebung mindestens einer der Werkstückflächen durch wenigstens ein zweites Werkzeug mit geometrisch bestimmter Schneide unter Zufuhr einer Kühlschmierflüssigkeit ausgestaltet ist, und eine funktional zwischen der wenigstens einen ersten Bearbeitungsstation und der wenigstens einen zweiten Bearbeitungsstation angeordnete Bewegungseinrichtung zum Positionieren eines Werkstück-Haltekopfs an der jeweiligen ersten oder zweiten Bearbeitungsstation, der angepasst ist, das Werkstück ohne Blockstück zu halten; weisen gemäß der Erfindung die ersten und zweiten Bearbeitungsstationen der Maschine voneinander getrennte erste und zweite Arbeitsräume auf, die jeweils gegenüber der Umgebung gekapselt sind, wobei die erste Bearbeitungsstation ein den ersten Arbeitsraum eigens begrenzendes Gehäuse aufweist und für eine im Wesentlichen trockene, spanende Bearbeitung des Werkstücks am Werkstückrand angepasst ist.

Wenn im Zusammenhang mit der vorliegenden Erfindung von einer "im Wesentlichen trockenen", spanenden Bearbeitung des Werkstücks im ersten Arbeitsraum der ersten Bearbeitungsstation die Rede ist, sollen darunter verstanden werden sowohl eine klassische Trockenbearbeitung, die gänzlich auf eine Flüssigkeit bei der Zerspanung verzichtet, als auch eine sogenannte "Minimalmengenschmierung" (MMS) bzw. "Minimalmengen-Kühlschmierung" (MMKS), bei der während des Zerspanungsprozesses mit einer geringen Menge eines Kühlschmiermittels gearbeitet wird (definitionsgemäß weniger als 50 ml Kühlschmierstoff pro Stunde). Für eine solche Schmierung kommt z.B. bei Sprühsystemen ein Flüssigkeits-Gas-Gemisch (vornehmlich Druckluft mit Ölversatz) zum Einsatz, das als Kühlschmiermittel beispielsweise über eine Düse prozesssicher dosiert zum ersten Werkzeug geleitet wird. Durch die optimale Kühlschmiermittelmenge an der richtigen Stelle wird die Entstehung von Reibungswärme verhindert oder zumindest stark reduziert. Eine eventuell verbleibende restliche Wärme wird über das erste Werkzeug und den Span abgeführt.

Letztlich fällt im Zuge der erfindungsgemäß vorgesehenen, "im Wesentlichen trockenen", spanenden Bearbeitung des Werkstückrands auch beim Einsatz einer MMS bzw. MMKS im ersten Arbeitsraum der ersten Bearbeitungsstation und an den dort entstehenden Spänen keine nennenswerte Feuchtigkeit aus, die ein Anhaften der Späne am Gehäuse oder ein Anlagern der Späne aneinander verstärken oder gerade bewirken würde.

Im Gegensatz dazu steht die in der zweiten Bearbeitungsstation unter Zufuhr einer Kühlschmierflüssigkeit ablaufende "nasse" spanende Bearbeitung der Werkstückfläche, bei der das zweite Werkzeug im zweiten Arbeitsraum regelrecht mit der Kühlschmierflüssigkeit überflutet wird. Eine solche Nassbearbeitung ist konventionell kreislaufbasiert und erfordert am zweiten Arbeitsraum der zweiten Bearbeitungsstation einen Ablaufanschluss, über den die anfallenden Späne mit der Kühlschmierflüssigkeit aus dem zweiten Arbeitsraum ausgeschwemmt werden, bevor die Kühlschmierflüssigkeit aufbereitet werden kann.

Dadurch, dass die erste Bearbeitungsstation den ersten Arbeitsraum in dem eigenen Gehäuse und die zweite Bearbeitungsstation den hiervon getrennten, zweiten Arbeitsraum besitzt, wobei beide Arbeitsräume jeweils gegenüber der Umgebung gekapselt sind, können zunächst die Randbearbeitung und die Flächenbearbeitung an verschiedenen optischen Werkstücken parallel bzw. zeitgleich erfolgen, und ohne einander zu stören, was im Hinblick auf die Effizienz der Maschine vorteilhaft ist.

Außerdem besteht keine Gefahr, dass es infolge einer nassen Bearbeitung in der zweiten Bearbeitungsstation zu einer Verschmutzung der trockenen ersten Bearbeitungsstation kommt, deren eigenes Gehäuse ferner auch gut zu reinigen ist.

Auf ein Werkstück bezogen, erfolgt die jeweilige Bearbeitung von Rand bzw. Fläche des Werkstücks jeweils separiert zunächst in einem im Wesentlichen trockenen Milieu und erst danach in einem nassen Milieu. Demgemäß kann das Werkstück nach der Randbearbeitung in der ersten Bearbeitungsstation mit dem Werkstück-Haltekopf trocken aus der ersten Bearbeitungsstation heraus bewegt werden. Dies hat zum einen den Vorteil, dass beim Transport des am Werkstück-Haltekopf blocklos gehaltenen Werkstücks von der ersten Bearbeitungsstation zu der zweiten Bearbeitungsstation die Gefahr minimiert ist, dass das Werkstück am Werkstück-Haltekopf verrutscht oder sogar abrutscht. Folglich kann auch der Transport selbst zeitlich optimiert erfolgen.

Zum anderen sind eine Trocknung und Reinigung des Werkstücks - und der damit verbundene, nicht-wertschöpfende Aufwand - vorteilhaft entbehrlich, bevor das Werkstück vom Werkstück-Haltekopf an bzw. in die zweite Bearbeitungsstation übergeben wird, weil nicht damit gerechnet werden muss, dass nach der im Wesentlichen trockenen Randbearbeitung in der ersten Bearbeitungsstation Bearbeitungsrückstände aufgrund einer Restfeuchte an dem Werkstück anhaften oder "kleben". Dementsprechend kann auch die Aufnahme des Werkstücks in der zweiten Bearbeitungsstation schnell und in prozesssicherer Weise erfolgen.

In einer bevorzugten Ausgestaltung der Maschine ist das Gehäuse der ersten Bearbeitungsstation auf einer dem ersten Werkzeug gegenüberliegenden Seite mit einer Arbeitsraumabdeckung abgedeckt, mittels der der erste Arbeitsraum von der Umgebung trennbar ist. Eine solche Arbeitsraumabdeckung könnte ggf. auch entfallen, etwa wenn am Gehäuse der ersten Bearbeitungsstation die in der Bearbeitungsstation entstehenden, trockenen Späne mit einer im Verhältnis großen Saugleistung abgesaugt würden. Demgegenüber ist das Vorsehen einer Arbeitsraumabdeckung jedoch im Hinblick auf eine hohe Energieeffizienz und eine geringe Geräuschentwicklung günstiger. Außerdem bietet diese Art der Abkapselung Vorteile hinsichtlich Arbeitsschutz und Instandhaltung/Wartung der Maschine, da allenfalls sehr geringe Mengen an Feinstäuben aus dem ersten Arbeitsraum austreten können.

Vorzugsweise ist diese Arbeitsraumabdeckung am Gehäuse der ersten Bearbeitungsstation variabel und weist zum Ankoppeln des Werkstück-Haltekopfs eine bezüglich des ersten Arbeitsraums bewegbare Schnittstelle mit einem offenen Koppelteil auf, durch das hindurch ein am Werkstück-Haltekopf gehaltenes Werkstück in den ersten Arbeitsraum eintauchbar ist, um mit dem ersten Werkzeug in Bearbeitungseingriff zu kommen. "Variabel" bedeutet dabei, dass die Arbeitsraumabdeckung angepasst ist, der Bewegung der Schnittstelle zu folgen und dennoch den ersten Arbeitsraum gegenüber der Umgebung zu separieren. Anstelle einer bewegbaren Schnittstelle an der variablen Arbeitsraumabdeckung könnte sich freilich auch das Gehäuse der ersten Bearbeitungsstation mit dem ersten Werkzeug unter der Arbeitsraumabdeckung weg bewegen. Eine solche Ausgestaltung wäre jedoch ungleich aufwändiger, weil eine weitere Kinematik benötigt würde, und ist deshalb weniger bevorzugt.

Was die Bewegungsmöglichkeiten bzw. Freiheitsgrade der Schnittstelle für den Werkstück-Haltekopf an der variablen Arbeitsraumabdeckung angeht, ist es ferner bevorzugt, wenn das Koppelteil der Schnittstelle bezüglich des ersten Arbeitsraums in einer durch eine erste Richtung und eine dazu quer verlaufende zweite Richtung an der variablen Arbeitsraumabdeckung gebildeten Ebene sowie einer quer zu dieser Ebene verlaufenden dritten Richtung bewegbar angeordnet ist. Demgemäß gestattet das Koppelteil der Schnittstelle vorzugsweise eine räumliche Bewegung des daran angedockten Werkstück-Haltekopfs bezüglich des Gehäuses der ersten Bearbeitungsstation, welches dabei vermittels der variablen Arbeitsraumabdeckung zur Umgebung hin abgedichtet bleibt. Alternativ wäre auch eine Aufteilung der für die Bearbeitung des Werkstücks notwendigen Bewegungen auf Werkstück und Werkzeug denkbar, z.B. eine lediglich ebene Bewegungsmöglichkeit des Koppelteils der Schnittstelle mit dem daran angedockten Werkstück-Haltekopf in den ersten und zweiten Richtungen bezüglich des Gehäuses der ersten Bearbeitungsstation plus einer Bewegungsmöglichkeit des ersten Werkzeugs in der dritten Richtung im Gehäuse der ersten Bearbeitungsstation. Dies würde indes wiederum eine zusätzliche, werkzeugseitige Kinematik erfordern und wäre darum aufwändiger und weniger bevorzugt.

Vorzugsweise weist das Koppelteil der Schnittstelle eine konisch geformte Innenumfangsfläche auf, während der Werkstück-Haltekopf einen Flanschabschnitt hat, der außenumfangsseitig zur konisch geformten Innenumfangsfläche des Koppelteils komplementär konisch ausgebildet ist, so dass beim Ankoppeln des Werkstück-Haltekopfs an die Schnittstelle vorteilhaft eine Selbstzentrierung zwischen dem Koppelteil und dem Flanschabschnitt erfolgt. Möglich wären freilich auch andere Geometrien an der Koppelstelle zwischen Koppelteil und Werkstück-Haltekopf, z.B. eine konische Fläche nur an einem Teil vorzusehen, die mit einer zylindrischen Fläche an dem anderen Teil zusammenwirkt. Im Hinblick auf eine möglichst gute Abdichtung an der Koppelstelle und eine problemlose Mitnahme des Koppelteils unter den Bewegungen des Werkstück-Haltekopfs ist demgegenüber der doppeltkonischen Ausgestaltung der Koppelstelle jedoch der Vorzug zu geben, schon weil mehr Kontaktfläche zur Abdichtung und Kraftübertragung zur Verfügung steht.

In einer weiteren, insbesondere im Hinblick auf einen geringen vorrichtungstechnischen Aufwand bevorzugten Ausgestaltung der vorbeschriebenen Schnittstelle ist deren Koppelteil vermittels einer Führungsanordnung bei einer Bewegung in der dritten Richtung geführt, wobei das Koppelteil durch eine Federanordnung von dem ersten Arbeitsraum der ersten Bearbeitungsstation weg in der dritten Richtung federvorgespannt ist. Eine solche Federanordnung kann z.B. Schraubendruckfedern und/oder Luftfedern umfassen. Aufgrund der Federanordnung folgt das an der Führungsanordnung geführte Koppelteil also auf eine "passive" Weise einer Bewegung des Werkstück-Haltekopfs in der dritten Richtung. Dies ließe sich alternativ ggf. auch durch eine entsprechend elastisch-federnde Ausgestaltung der variablen Arbeitsraumabdeckung in diesem Bereich bewerkstelligen, was die variable Arbeitsraumabdeckung indes steifer machen würde. Es wären auch noch andere Maßnahmen denkbar, um eine Verbindung zwischen dem Koppelteil der Arbeitsraumabdeckung und dem Werkstück-Haltekopf unter dessen Bewegungen aufrechtzuerhalten, z.B. eine Formschlussverbindung (Bajonett od.dgl.) oder eine Magnetverbindung zwischen den in Rede stehenden Teilen. Diese "aktiven" Verbindungsarten würden allerdings einen höheren vorrichtungstechnischen Aufwand bedingen und/oder eine weitere (Dreh)Bewegungsmöglichkeit des Werkstück-Haltekopfs bezüglich des Koppelteils erfordern, weswegen sie weniger bevorzugt sind.

Ist das Koppelteil der Schnittstelle an der Führungsanordnung bezüglich der durch die ersten und zweiten Richtungen gebildeten Ebene optional auch verkippbar geführt, ermöglicht dies in vorteilhafter Weise eine vermittels der variablen Arbeitsraumabdeckung abgedichtete Verkippung des Werkstück-Haltekopfs bezüglich des ersten Werkzeugs in der ersten Bearbeitungsstation, um am Werkstückrand ggf. auch prismatisch angestellte bzw. verkippte Geometrien zu erzeugen.

In einer bevorzugten Ausgestaltung der Maschine ist ferner vorgesehen, dass die variable Arbeitsraumabdeckung eine Arretiereinrichtung für das Koppelteil der Schnittstelle aufweist, mit wenigstens einem Verriegelungselement, das wahlweise von einer Arretierposition für das Koppelteil in eine Freigabeposition für das Koppelteil bewegbar ist und umgekehrt, wobei das Verriegelungselement angepasst ist, in seiner Arretierposition das Koppelteil in einer definierten Parkstellung zu halten, in der die das Koppelteil vorspannende Federanordnung komprimiert ist, und in seiner Freigabeposition vom Koppelteil außer Eingriff zu sein, so dass das Koppelteil in Arbeitsstellungen unter Vorspannung durch die Federanordnung an der Führungsanordnung geführt bewegbar ist. Ein Hauptvorteil einer solchen optionalen Arretiereinrichtung für das Koppelteil der Schnittstelle besteht darin, dass, wenn in der ersten Bearbeitungsstation keine Bearbeitung eines Werkstücks erfolgt, das Koppelteil in der durch das Verriegelungselement vorgegebenen Parkstellung geparkt werden kann und sich somit in einer (Zahlwort) räumlich klar definierten Position befindet. Soll dann eine Bearbeitung eines am Werkstück-Haltekopf gehaltenen Werkstücks in der ersten Bearbeitungsstation der Maschine erfolgen, so kann der Werkstück-Haltekopf über die Bewegungseinrichtung schnell und sicher zum Andocken an das Koppelteil der Schnittstelle heranbewegt werden. Andernfalls wäre die jeweilige Position des Koppelteils der Schnittstelle z.B. aufwändig zu sensieren, um ein schnelles Anfahren und Finden durch den Werkstück-Haltekopf zu gewährleisten. Letztlich ist die Arretiereinrichtung also einer hohen Effizienz der Maschine mit einem geringen vorrichtungstechnischen Aufwand förderlich.

Insbesondere im Hinblick auf eine möglichst günstige und kompakte Bauweise sowie eine tunlichst leichte Bewegbarkeit bevorzugt ist des Weiteren eine Ausgestaltung der Maschine, bei der die variable Arbeitsraumabdeckung eine Faltenbalganordnung aufweist, umfassend einen am Gehäuse der ersten Bearbeitungsstation fest angeschlossenen äußeren Rahmen, einem im äußeren Rahmen in der ersten Richtung gleitfähig geführten mittleren Rahmen, der auf in der ersten Richtung gegenüberliegenden Seiten über jeweils einen flächigen Faltenbalg mit dem äußeren Rahmen verbunden ist, und einem im mittleren Rahmen in der zur ersten Richtung quer verlaufenden zweiten Richtung gleitfähig geführten inneren Rahmen, der auf in der zweiten Richtung gegenüberliegenden Seiten über jeweils einen flächigen Faltenbalg mit dem mittleren Rahmen verbunden ist, wobei der innere Rahmen mit einer Öffnung für einen Durchgriff des Werkstück-Haltekopfs in den ersten Arbeitsraum hinein versehen ist und die Schnittstelle für den Werkstück-Haltekopf trägt. Mögliche Alternativen für eine variable Arbeitsraumabdeckung umfassen eine sack- oder schlauchartige Abdeckung, Rollos, Lamellenabdeckungen, Teleskopbleche od.dgl. zwischen dem Gehäuse der ersten Bearbeitungsstation und der Schnittstelle für den Werkstück-Haltekopf, die verglichen zu der Faltenbalganordnung allerdings weniger gute Kompromisse zwischen guter Abdichtung des ersten Arbeitsraum, hoher Leichtgängigkeit bei der Bewegung der Schnittstelle, geringem Verschleiß und Wartungsaufwand bei außerdem möglichst geringen Kosten darstellen. Zur variablen Abdeckung des ersten Arbeitsraums in den ersten und zweiten Richtungen ebenfalls denkbar wäre ein mit der Schnittstelle mitfahrendes Schild, was indes im Vergleich zur bevorzugten Faltenbalganordnung einen hohen Bau- bzw. Funktionsraumbedarf für die Arbeitsraumabdeckung bedingen würde.

In einer bevorzugten Weiterbildung der mit der obigen Faltenbalganordnung an der ersten Bearbeitungsstation versehenen Maschine weist die Faltenbalganordnung ferner einen im Wesentlichen hohlzylindrischen Faltenbalg auf, der den ersten Arbeitsraum gegenüber der Umgebung abdichtend zwischen dem Koppelteil der Schnittstelle und dem inneren Rahmen angeordnet ist. Als Alternativen hierzu sind an dieser Stelle z.B. Teleskophülsen oder ein Rollbalg denkbar, aus den oben angegebenen Gründen jedoch weniger bevorzugt.

Vorzugsweise hat das Gehäuse der ersten Bearbeitungsstation wenigstens einen Ausgangsanschluss, über den aus dem ersten Arbeitsraum insbesondere Späne absaugbar sind. Ein solcher Ausgangsanschluss könnte grundsätzlich auch an der Arbeitsraumabdeckung sitzen, was jedoch mit einem höheren Verbindungsaufwand verbunden wäre.

Ferner weist das Gehäuse der ersten Bearbeitungsstation vorzugsweise mindestens einen Eingangsanschluss auf, über den in den ersten Arbeitsraum insbesondere Umgebungsluft passiv ansaugbar oder aktiv zuführbar ist. So kann auf eine einfache Art und Weise zuverlässig dafür Sorge getragen werden, dass sich im Gehäuse der ersten Bearbeitungsstation eine Strömung ausbildet, welche die bei der Bearbeitung anfallenden Späne zu einem Ausgang des ersten Arbeitsraums mitreißt. Ein Eingangsanschluss am Gehäuse ist ggf. aber auch entbehrlich, wenn an anderer Stelle ausreichend Luft in den ersten Arbeitsraum gelangen kann, z.B. als Sperrluft von einer das erste Werkzeug antreibenden Spindel und/oder über entsprechende Durchgänge an/in der Arbeitsraumabdeckung. Letztlich kann ein Eingangsanschluss am Gehäuse, der z.B. mit einer Drosselklappe versehen ist, vorteilhaft eine Beeinflussung des Luftstroms in dem ersten Arbeitsraum auch in Abhängigkeit von dem in der ersten Bearbeitungsstation zu zerspanenden Material ermöglichen.

Vorzugsweise besitzt das Gehäuse der ersten Bearbeitungsstation des Weiteren wenigstens eine von einem Flanschabschnitt umgebene Öffnung, durch die eine am Flanschabschnitt angeflanschte Spindel der ersten Bearbeitungsstation mit einer drehend antreibbaren Werkzeugaufnahme für das erste Werkzeug in den ersten Arbeitsraum hineinragt. Vorteilhaft kann in der Maschine dieser Flanschabschnitt also zur Befestigung der Spindel am Gehäuse der ersten Bearbeitungsstation oder umgekehrt zur Befestigung des Gehäuses an der Spindel der ersten Bearbeitungsstation dienen.

In einer bevorzugten Ausgestaltung der Maschine ist an dem Gehäuse der ersten Bearbeitungsstation wenigstens eine Düse für Druckluft angebracht, die auf das erste Werkzeug für die im Wesentlichen trockene spanende Formgebung des Werkstückrands fest gerichtet oder variabel richtbar ist, um eine Spanstelle zwischen dem Werkstück und dem ersten Werkzeug auszublasen und zu kühlen. Gegenüber einer ebenfalls möglichen Ausgestaltung ohne Düse(n) ist das Vorsehen wenigstens einer Düse im Hinblick auf eine effiziente Spanabfuhr von Vorteil. Am Werkstück entstehen vorteilhaft keine Spanablagerungen bzw. Späne können sich nicht in erzeugten Geometrien festsetzen. Infolge der Kühlung neigen Späne auch nicht zum Verkleben. Über eine solche Düse kann außerdem vorteilhaft eine ggf. impulsförmige Abgabe von Luft zum Spanbrechen an der Spanstelle erfolgen.

Vorzugsweise ist das Gehäuse der ersten Bearbeitungsstation ferner im Hinblick auf eine unbehinderte Abfuhr von Spänen strömungstechnisch optimiert gestaltet, ohne Hinterschnitte und ohne Ecken im ersten Arbeitsraum. Wartungs- und Reinigungsarbeiten am/im ersten Arbeitsraum können so vorteilhaft reduziert werden, wenn nicht sogar entfallen.

Das Gehäuse der ersten Bearbeitungsstation ist an seinen den ersten Arbeitsraum begrenzenden Oberflächen des Weiteren vorzugsweise geglättet ausgebildet, z.B. durch Polieren oder Beschichten. Infolgedessen haften Späne nicht an bzw. können sich an der Gehäusewandung nicht festsetzen. Außerdem reduziert diese Maßnahme vorteilhaft den Absaugwiderstand.

Schließlich ist das Gehäuse der ersten Bearbeitungsstation vorzugsweise aus einem Kunststoff mit ggf. elektrisch leitfähigen, antistatischen oder statisch ableitenden Eigenschaften spritzgegossen oder durch eine additive Fertigung hergestellt. Verglichen zu anderen möglichen Materialien und Fertigungsverfahren (etwa Kanten und Schweißen oder Tiefziehen metallischer Bleche, Leichtmetall-Druckguss) ist dies von Vorteil insbesondere im Hinblick auf tunlichst geringe Gestehungskosten bei gleichzeitig guter Möglichkeit einer strömungstechnisch optimierten Gestaltung des Gehäuses. Durch Einsatz eines Kunststoffs mit den erwähnten Eigenschaften kann auch auf einfache Weise ein Anhaften von Spänen infolge statischer Aufladung an der Gehäusewandung verhindert oder mindestens reduziert werden.

In zweckmäßiger Ausgestaltung kann die Maschine ferner mit einer Spanabfuhreinrichtung ausgerüstet sein, an der einer oder bevorzugt beide der ersten und zweiten Arbeitsräume der ersten und zweiten Bearbeitungsstationen angeschlossen ist/sind. Sind beide Arbeitsräume an einer gemeinsamen Spanabfuhreinrichtung angeschlossen, reduziert dies in vorteilhafter Weise den mit der Spanabfuhr verbundenen Aufwand.

Was den (im Wesentlichen) trockenen Teil der Bearbeitung in der ersten Bearbeitungsstation der Maschine angeht, umfasst die Spanabfuhreinrichtung vorzugsweise eine Absaugung mit einem Spanabscheider, welche an dem Gehäuse der ersten Bearbeitungsstation angeschlossen ist, um Späne aus dem ersten Arbeitsraum abzusaugen. Prinzipiell wäre es zwar auch möglich, die Späne aus dem Gehäuse der ersten Bearbeitungsstation mit einem Gebläse auszublasen. Demgegenüber einfacher umsetzbar und prozesssicherer ist indes eine Sauglösung, bei der insbesondere das Fördervolumen gut zu überwachen ist. Letztere reduziert auch die Gefahr von Feinstaub in der Umgebung und genügt somit gut etwaigen Arbeitsschutzanforderungen. Ist die Absaugung zudem mit einem Spanabscheider ausgerüstet - im Gegensatz zu etwa reinen Filterlösungen - so kann die Absaugung sehr energieeffizient arbeiten. Dennoch vorhandene Filter in der Absaugung können sich nicht so schnell zusetzen, auch diesbezügliche Wartungsintervalle verlängern sich vorteilhaft.

Was ferner insbesondere den nassen Teil der Bearbeitung in der zweiten Bearbeitungsstation der Maschine angeht, umfasst die Spanabfuhreinrichtung vorzugsweise einen Sammelbehälter, in den Späne über einen Ablaufanschluss des zweiten Arbeitsraums mit der Kühlschmierflüssigkeit ausschwemmbar sind. Gegenüber einer prinzipiell ebenfalls denkbaren Ausgestaltung der Maschine ohne Sammelbehälter, bei der etwa die Kühlschmierflüssigkeit mit den Spänen über eine Verrohrung mit einem Gefälle zu einer externen Kühlschmiermittelaufbereitung geleitet wird, besteht ein wesentlicher Vorteil des in der Maschine integrierten Sammelbehälters darin, dass bei der Wahl des Maschinenstellplatzes eine hohe Flexibilität gegeben ist.

Insbesondere im Hinblick auf einen möglichst geringen vorrichtungstechnischen Aufwand und Bauraumbedarf ist es ferner bevorzugt, wenn der Spanabscheider der (trockenen) Absaugung mit dem (nassen) Sammelbehälter verbindbar ist, so dass die Späne aus der im Wesentlichen trockenen Bearbeitung zusammen mit den Spänen aus der nassen Bearbeitung entsorgt werden können. Dabei "bindet" die aus der zweiten Bearbeitungsstation kommende Kühlschmierflüssigkeit auch vorteilhaft noch die kleinsten Partikel, die über den Spanabscheider der Absaugung aus der ersten Bearbeitungsstation kommen, so dass hier keine Staubbelastung der Umgebung erfolgen kann.

Was wiederum den (im Wesentlichen) trockenen Teil der Bearbeitung in der Maschine angeht, ist der Spanabscheider der Absaugung vorzugsweise als Zyklonabscheider ausgestaltet, mit einem Oberteil, in dem ein an eine Unterdruckquelle der Absaugung anschließbares, zentrales Tauchrohr mündet und das mit einem an dem ersten Arbeitsraum angeschlossenen, umfangsseitigen Eingangsanschluss versehen ist, mit einem sich an das Oberteil anschließenden, konischen Unterteil, das in eine Entspannungskammer übergeht, und mit einem die Entspannungskammer nach unten abschließenden Spänesammler. Ein derartiger Spanabscheider arbeitet in vorteilhafter Weise sehr energieeffizient und im Verhältnis leise mit hohen Abscheidegraden und ist darüber hinaus sehr wartungsarm. Dies wirkt sich auch vorteilhaft auf die Wartungsintervalle der eigentlichen Absaugung mit ihren üblicherweise vorgesehenen Feinfiltern aus. Nicht zuletzt können dort Filter mit aufwändigen und lautstarken Abrüttellösungen und der damit zwingend verbundene Wartungs- und Reinigungsaufwand gänzlich entfallen.

Insbesondere mit Blick auf wiederum einen möglichst geringen Wartungs- und Reinigungsaufwand ist es ferner bevorzugt, wenn im Sammelbehälter der Spanabfuhreinrichtung eine Schredderpumpe angeordnet ist, deren Pumpenkopf mit einem Schneidwerk zum Zerkleinern der Späne ausgerüstet ist. Auch große Abfallstücke (z.B. Ringabschnitte bzw. Ringsegmente), die infolge der oben beschriebenen "Rand-vor-Fläche"-Bearbeitung in der zweiten Bearbeitungsstation anfallen können und mit der Kühlschmierflüssigkeit aus dem zweiten Arbeitsraum zum Sammelbehälter hin ausgeschwemmt werden, können so auf einfache Weise entsorgt werden. Grundsätzlich alternativ zum Schneidwerk an der Pumpe mögliche Abfanglösungen in bzw. vor dem Sammelbehälter, wie z.B. Rechen oder Lochplatten, die dazu dienen, im Verhältnis große Abfallstücke abzufangen, können so vorteilhaft vermieden werden, ebenso wie der damit verbundene Reinigungs- und Wartungsaufwand.

In einer bevorzugten Weiterbildung der Maschine weist der Spänesammler des Spanabscheiders eine Klappe auf, die mittels eines Klappenantriebs wahlweise zu öffnen ist, um den Spänesammler zu entleeren, wobei die Klappe vorzugsweise mittels einer umlaufenden Dichtung gegenüber einem unteren Auslassflansch des Spänesammlers abgedichtet ist. Eine solche Klappenlösung ist gegenüber möglichen Alternativen, wie einer Schieberlösung oder einer Zellenradschleuse, insbesondere im Hinblick auf einen geringen vorrichtungstechnischen Aufwand sowie eine sichere und zuverlässige Entleerung des Spänesammlers im Bedarfsfalle von Vorteil. Dies insbesondere deshalb, weil die Gefahr eines Klemmens weitestgehend vermieden wird. Ist dabei die optionale umlaufende Dichtung vorgesehen, kann Falsch- oder Nebenluft allenfalls in geringem Umfang in den Spanabscheider gelangen bzw. gezogen werden, die dort den Abscheidegrad verschlechtern könnte oder eine stärkere Saugwirkung der Absaugung für einen effizienten Betrieb des Spanabscheiders erfordern würde.

Grundsätzlich kann der Spanabscheider z.B. oberhalb des Sammelbehälters angeordnet sein, so dass die aus dem ersten Arbeitsraum stammenden Späne direkt in den Sammelbehälter entleert werden können. Einer solchen Anordnung gegenüber bevorzugt ist jedoch eine Ausgestaltung der Maschine, bei der der Spänesammler des Spanabscheiders in ein Abflussrohr zwischen dem Ablaufanschluss des zweiten Arbeitsraums und dem Sammelbehälter der Spanabfuhreinrichtung entleerbar ist. Dies führt vorteilhaft zu einer besseren Vermischung der Späne aus der ersten Bearbeitungsstation mit der verunreinigten Kühlschmierflüssigkeit aus der zweiten Bearbeitungsstation auf dem Weg zum Sammelbehälter und folglich zu einem gleichmäßigeren Eintrag sämtlicher Bearbeitungsabfälle in den Sammelbehälter. Dort ist letztlich insbesondere eine prozesssichere Entsorgung der Bearbeitungsabfälle über die Schredderpumpe einfacher zu bewerkstelligen.

Vorzugsweise ist ferner die Schredderpumpe im Sammelbehälter über ein automatisiert schaltbares Ventil mit einer Förderstrecke für verunreinigte Kühlschmierflüssigkeit verbindbar. Eine solche Ausgestaltung gestattet vorteilhaft einen kontinuierlichen Betrieb der Schredderpumpe, ohne das Risiko eines pumpenschädigenden Trockenlaufs der Schredderpumpe. Dabei werden infolge der ständigen Fluidbewegung (Nebenstrom) auch Ablagerungen im Sammelbehälter weitestgehend vermieden. Zudem wird die Gefahr von Anlaufschwierigkeiten der Schredderpumpe durch Blockaden des Schneidwerks mit z.B. besonders großen Abfallstücken aus der zweiten Bearbeitungsstation vorteilhaft gebannt.

Was die konkrete Ausbildung der funktional zwischen der ersten Bearbeitungsstation und der zweiten Bearbeitungsstation der Maschine eingefügten Bewegungseinrichtung angeht, bestehen unterschiedliche Gestaltungsmöglichkeiten. Beispielsweise kann hier ein Mehr-Achs-Roboter zum Einsatz kommen, wie er in den oben erwähnten Druckschriften WO 2023/066824 A1 und WO 2023/ 073249 A1 gezeigt ist. Insbesondere im Hinblick auf eine besonders hohe Steifigkeit und Genauigkeit bei den Positionierbewegungen - was letztlich auch einer großen Prozesssicherheit förderlich wäre - ist hier jedoch eine Ausgestaltung der Maschine bevorzugt, bei der die Bewegungseinrichtung angepasst ist, den Werkstück-Haltekopf in wenigstens drei linearen, senkrecht zueinander stehenden Achsrichtungen zu bewegen, um in der ersten Bearbeitungsstation die für die Randbearbeitung erforderlichen Zustell- und Vorschubbewegungen zu erzeugen, zwischen der ersten Bearbeitungsstation und der zweiten Bearbeitungsstation einen Transport des am Werkstück-Haltekopf gehaltenen Werkstücks zu ermöglichen und in der zweiten Bearbeitungsstation eine positionierte Übergabe des Werkstücks zu gestatten.

Bei entsprechender Anordnung der ersten und zweiten Bearbeitungsstationen zueinander sind die oben erwähnten drei linearen Bewegungsfreiheitsgrade der Bewegungseinrichtung für den Werkstück-Haltekopf grundsätzlich hinreichend, um die in Rede stehenden Werkstück-Positionier- und Transportaufgaben an bzw. zwischen den ersten und zweiten Bearbeitungsstationen der Maschine zu erfüllen. Optional kann die Bewegungseinrichtung der Maschine schließlich zudem angepasst sein, den Werkstück-Haltekopf um wenigstens eine Schwenkachse zu verschwenken, die quer zu einer der erwähnten Achsrichtungen verläuft. Diese zusätzliche Schwenkachse vergrößert vorteilhaft die Variantenvielfalt bei den in der ersten Bearbeitungsstation erzeugbaren Werkstückgeometrien - beispielhaft genannt sei hier die Möglichkeit der Erzeugung prismatisch verkippter Geometrien in der ersten Bearbeitungsstation - und bietet außerdem Vorteile im Werkstückhandling, wenn es gilt, das Werkstück am Werkstück-Haltekopf aufzunehmen oder vom Werkstück-Haltekopf abzugeben.

Weitere Merkmale, Eigenschaften und Vorteile der erfindungsgemäßen Maschine ergeben sich für den Fachmann aus der nachfolgenden Beschreibung eines bevorzugten Ausführungsbeispiels.

### KURZE BESCHREIBUNG DER ZEICHNUNGEN

Im Folgenden wird die Erfindung anhand eines bevorzugten Ausführungsbeispiels unter Bezugnahme auf die beigefügten, teilweise vereinfachten bzw. schematischen Zeichnungen näher erläutert. In den Zeichnungen zeigen:
- Fig. 1: eine perspektivische Ansicht einer erfindungsgemäßen Maschine zur spanenden Bearbeitung von optischen Werkstücken aus Kunststoff, namentlich Brillenlinsen, von schräg oben / hinten links, mit Blick auf eine erste Bearbeitungsstation für eine vornehmlich trockene spanende Bearbeitung der Werkstücke, eine zweite Bearbeitungsstation für eine nasse spanende Bearbeitung der Werkstücke, eine Bewegungseinrichtung mit einem Werkstück-Haltekopf zum Positionieren und Transportieren der Werkstücke dazwischen sowie eine Spanabfuhreinrichtung für beide Bearbeitungsstationen;
- Fig. 2: eine perspektivische Ansicht der Maschine gemäß Fig. 1 von schräg oben / vorne rechts mit Blick auf die zweite Bearbeitungsstation und die Bewegungseinrichtung;
- Fig. 3: eine Vergrößerung des Details III in Fig. 1, die illustriert, wie die Bewegungseinrichtung der Maschine den Werkstück-Haltekopf bezüglich einer bewegbaren Schnittstelle zum Ankoppeln des Werkstück-Haltekopfs an einer variablen Arbeitsraumabdeckung der ersten Bearbeitungsstation positioniert;
- Fig. 4: eine Vergrößerung des Details IV in Fig. 2 zur weiteren Veranschaulichung des Aufbaus der Bewegungseinrichtung der Maschine;
- Fig. 5: eine Vergrößerung des Details V in Fig. 2, mit Blick in die zweite Bearbeitungsstation der Maschine, in der eine zentrale Werkstückspindel mit einer Aufnahme zum blocklosen Halten der optischen Werkstücke angeordnet ist;
- Fig. 6: eine Draufsicht auf die Maschine gemäß Fig. 1;

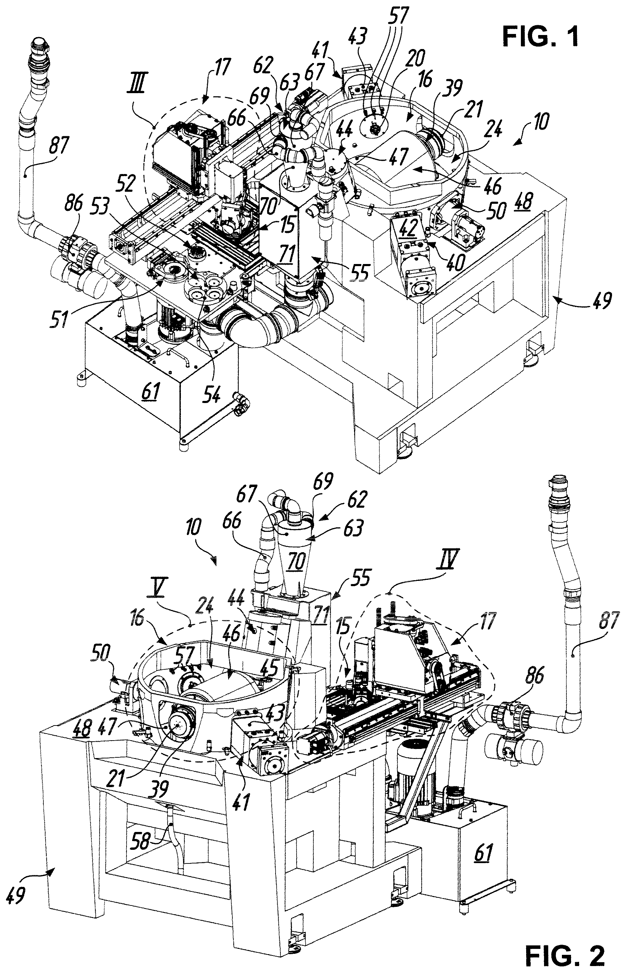

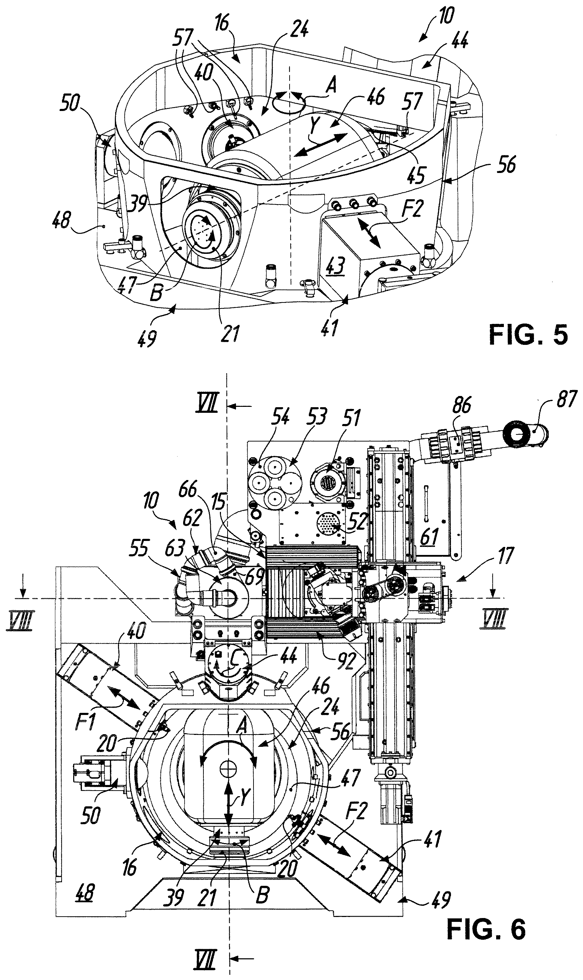

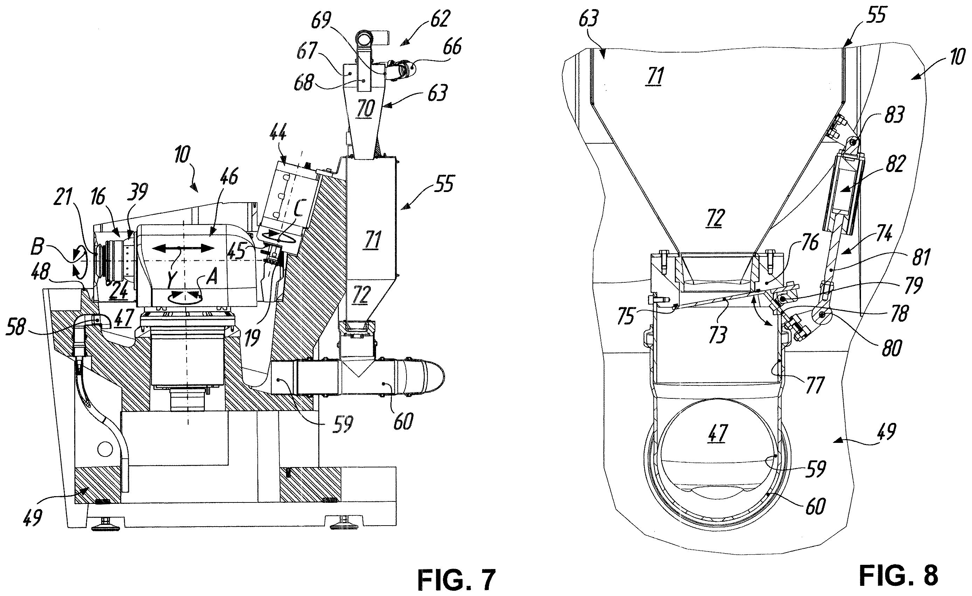

- Fig. 7: eine Schnittansicht der Maschine gemäß Fig. 1 entsprechend der Schnittverlaufslinie VII-VII in Fig. 6, zur Illustration weiterer Details des "nassen" zweiten Arbeitsraums der zweiten Bearbeitungsstation, der über einen Ablaufanschluss an einem Abflussrohr einer Spanabfuhreinrichtung angeschlossen ist, in das auch ein Spänesammler eines der ersten Bearbeitungsstation zugeordneten Spanabscheiders über eine Klappe entleerbar ist, wobei die Baugruppen zur nassen spanenden Bearbeitung des Werkstücks in der zweiten Bearbeitungsstation zur Vereinfachung der Darstellung ungeschnitten dargestellt sind;
- Fig. 8: eine zu allen Seiten hin abgebrochene Schnittansicht der Maschine gemäß Figur 1 entsprechend der Schnittverlaufslinie VIII-VIII in Fig. 6, mit Blick auf die Klappe zur Entleerung des Spänesammlers;
- Fig. 9: eine nach rechts abgebrochene, perspektivische Ansicht der Maschine gemäß Fig. 1 von hinten links, mit Blick auf die Spanabfuhreinrichtung der Maschine und deren Verbindungen zu den voneinander getrennten ersten und zweiten Arbeitsräumen der ersten und zweiten Bearbeitungsstationen, zu einer Unterdruckquelle und zu einer Einrichtung zur Aufbereitung der mit Spänen verunreinigten Kühlschmierflüssigkeit über einen Sammelbehälter der Spanabfuhreinrichtung, der aufgebrochen dar- gestellt ist, um die Sicht auf eine Schredderpumpe im Sammelbehälter freizugeben;

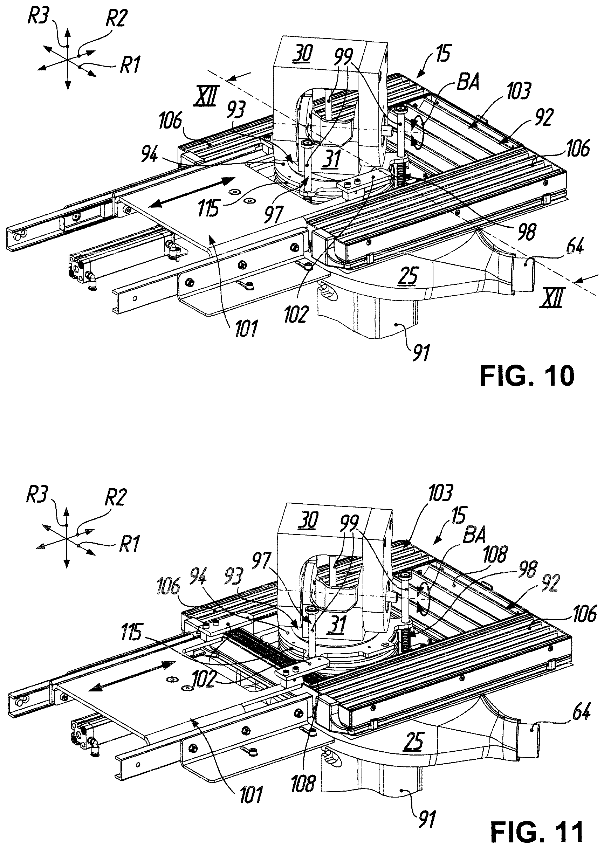

- Fig. 10: eine perspektivische, nach unten abgeschnittene Ansicht von schräg oben der von der Maschine gemäß Fig. 1 separiert dargestellten, ersten Bearbeitungsstation, mit Blick auf deren eigens zur Begrenzung des ersten Arbeitsraums vorgesehenen Gehäuse mit einer daran von unten angeflanschten Spindel zum Antrieb eines ersten Werkzeugs, eine variable Arbeitsraumabdeckung mit einer Faltenbalganordnung auf dem Gehäuse sowie eine Arretiereinrichtung für die Arbeitsraumabdeckung in einer Arretierposition, wobei zudem eine Schwenkgabel der Bewegungseinrichtung zu sehen ist, an welcher der Werkstück-Haltekopf angebracht ist, der mit einem Werkstück bestückt in einer Koppelposition in den ersten Arbeitsraum eingetaucht ist;
- Fig. 11: eine hinsichtlich der Darstellungsweise und des Blickwinkels der Fig. 10 entsprechende, perspektivische Ansicht der ersten Bearbeitungsstation der Maschine gemäß Fig. 1, in der sich die Arretiereinrichtung in einer Freigabeposition befindet;
- Fig. 12: eine nach unten im Bereich des ersten Arbeitsraums abgebrochene Schnittansicht der ersten Bearbeitungsstation der Maschine gemäß Fig. 1 entsprechend der Schnittverlaufslinie XII-XII in Fig. 10,
- Fig. 13: eine hinsichtlich der Darstellungsweise den Fig. 10 und 11 im Wesentlichen entsprechende, perspektivische Ansicht der ersten Bearbeitungsstation der Maschine gemäß Fig. 1 aus einem anderen Blickwinkel, in der im Vergleich zu den Fig. 10 und 11 die Arretiereinrich- tung und die Faltenbalganordnung der variablen Arbeitsraumabdeckung weggelassen wurden, wobei sich der Werkstück-Haltekopf in einer bezüglich der Schwenkgabel verschwenkten Arbeitsstellung befindet;

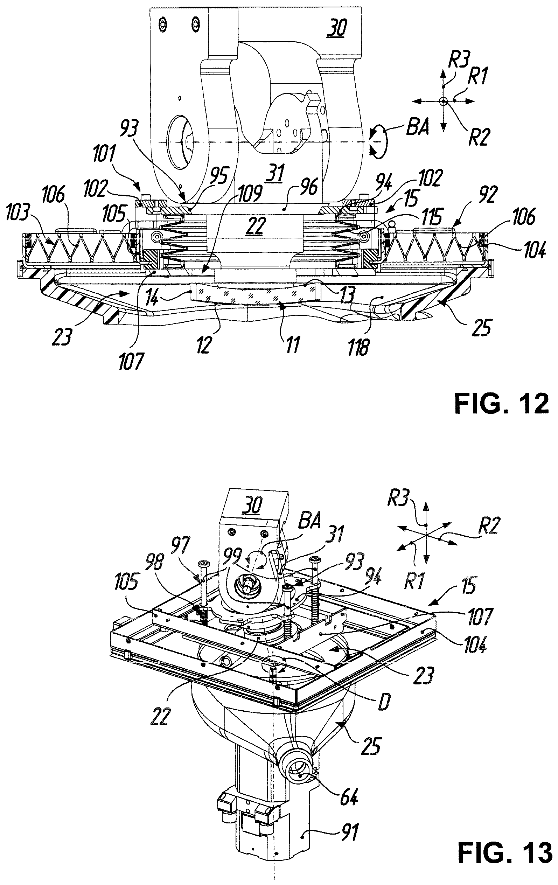

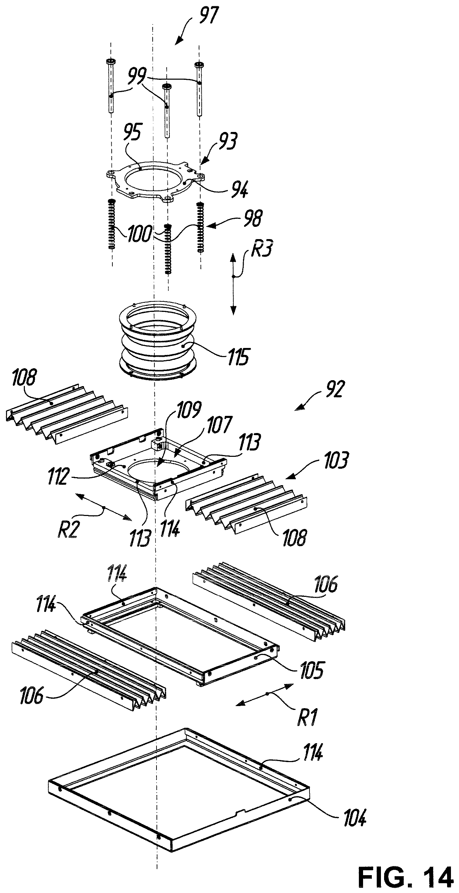

- Fig. 14: eine perspektivische Explosionsdarstellung der von der ersten Bearbeitungsstation der Maschine gemäß Fig. 1 isoliert gezeigten, variablen Arbeitsraumabdeckung mit der Faltenbalganordnung im Blickwinkel der Fig. 13, die von unten nach oben entlang einer Basisachse betrachtet einen äußeren Rahmen, einen mittleren Rahmen mit flächigen Faltenbälgen zu beiden Längsseiten, einen inneren Rahmen mit flächigen Faltenbälgen zu beiden Querseiten, einen hohlzylindrischen Faltenbalg, eine Federanordnung, ein Koppelteil der Schnittstelle für den Werkstück-Haltekopf sowie eine Führungsanordnung dafür zeigt;
- Fig. 15: eine in der Zeichnungsebene im Uhrzeigersinn gedrehte Draufsicht auf die in der Fig. 13 ohne Arretiereinrichtung und Faltenbalganordnung gezeigte erste Bearbeitungsstation der Maschine gemäß Fig. 1;
- Fig. 16: eine nach unten abgebrochene Schnittansicht der in der Fig. 13 gezeigten ersten Bearbeitungsstation der Maschine gemäß Fig. 1 entsprechend der Schnittverlaufslinie XVI-XVI in Fig. 15;
- Fig. 17: eine Schnittansicht der in der Fig. 13 gezeigten ersten Bearbeitungsstation der Maschine gemäß Fig. 1 entsprechend der Schnittverlaufslinie XVII-XVII in Fig. 16;
- Fig. 18: eine im Maßstab vergrößerte, zu allen Seiten hin abgebrochene Schnittansicht der in der Fig. 13 gezeigten ersten Bearbeitungsstation der Maschine gemäß Fig. 1 entsprechend der Schnittverlaufslinie XVIII-XVIII in Fig. 15, wobei der hohlzylindrische Faltenbalg der Faltenbalganordnung zur Orientierung im unverformten Zustand mit dargestellt ist;
- Fig. 19: eine im Maßstab vergrößerte, zu allen Seiten hin abgebrochene Schnittansicht der in der Fig. 13 gezeigten ersten Bearbeitungsstation der Maschine gemäß Fig. 1 entsprechend der Schnittverlaufslinie XIX-XIX in Fig. 15, wobei wiederum der hohlzylindrische Faltenbalg der Faltenbalganordnung zur Orientierung im unverformten Zustand mit dargestellt ist - ebenso wie eine Schraubendruckfeder der Federanordnung;
- Fig. 20: eine im Maßstab vergrößerte Seitenansicht des inneren Rahmens der in Fig. 14 gezeigten Faltenbalganordnung der ersten Bearbeitungsstation der Maschine gemäß Fig. 1, mit dem vermittels der Federanordnung vorgespannten, durch die Führungsanordnung geführten Koppelteil der Schnittstelle für den Werkstück-Haltekopf, wobei das Koppelteil entsprechend der Darstellung in der Fig. 13 in einer verkippten Arbeitsstellung gezeigt ist; und
- Fig. 21: eine nach links und nach unten abgebrochene Schnittansicht der in Fig. 20 gezeigten Bauteile der variablen Arbeitsraumabdeckung entsprechend der Schnittverlaufslinie XXI-XXI in Fig. 20.

Zu den Zeichnungen sei an dieser Stelle noch angemerkt, dass die Darstellung der erfindungsgemäßen Maschine in großen Teilen vereinfacht ist. So wurden in den Zeichnungen zur Freigabe der Sicht auf wesentliche Bauteile bzw. Baugruppen der Maschine und zur Vereinfachung der Darstellung zumeist insbesondere auch einzelne Teile der Verkleidung, der Versorgungseinrichtungen (einschließlich Leitungen, Schläuche und Rohre) für Strom, Druckluft und die Kühlschmierflüssigkeit und der Absaugung sowie die Mess-, Wartungs- und Sicherheitseinrichtungen weggelassen, soweit sie für das Verständnis der Erfindung nicht erforderlich erscheinen.

### DETAILLIERTE BESCHREIBUNG DES AUSFÜHRUNGSBEISPIELS

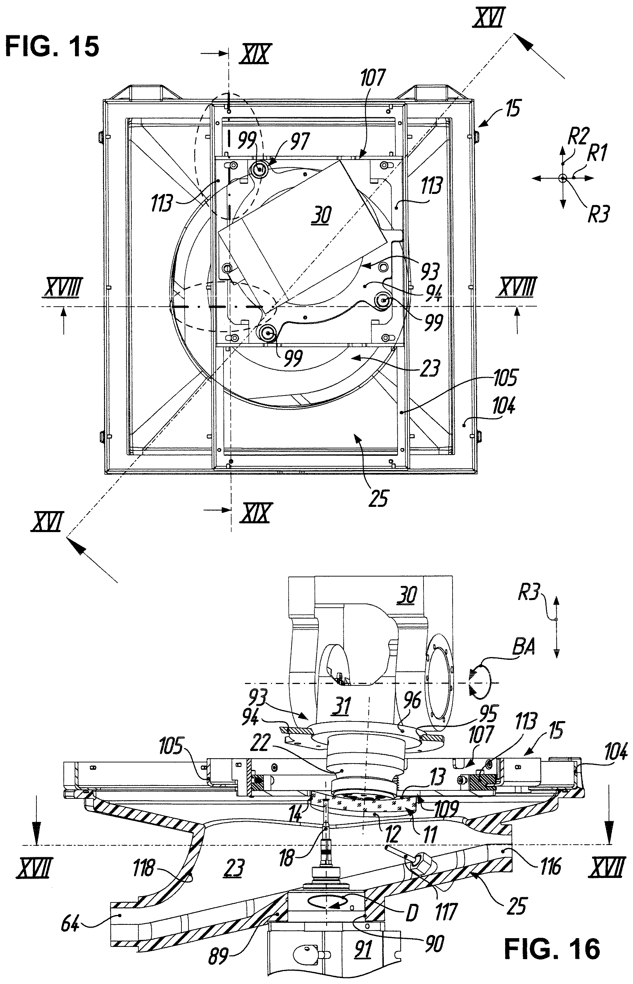

In den Fig. 1 bis 9 ist eine kombinierte CNC-Fräs-Drehmaschine (nachfolgend kurz Maschine genannt) zur spanenden Bearbeitung von insbesondere Brillenlinsen aus Kunststoff allgemein mit dem Bezugszeichen 10 beziffert. Eine Brillenlinse 11 als Beispiel für ein zu bearbeitendes optisches Werkstück ist in den Fig. 12 und 16 gezeigt.

Die Brillenlinse 11 hat zwei - jedenfalls am Ende der Bearbeitung optisch wirksame - Werkstückflächen, die nachfolgend entsprechend ihrer Einbaulage in einem Brillengestell Frontseite 12 (vom Auge abgewandt) und Rückseite 13 (dem Auge zugewandt) genannt werden, und einen Werkstückrand 14 dazwischen. Es handelt sich in den verschiedenen Bearbeitungszuständen, d.h. ausgehend vom Brillenlinsenrohling über das teilbearbeitete Brillenlinsenhalbzeug bis hin zur fertigbearbeiteten Brillenlinse - hier unabhängig vom jeweiligen Bearbeitungszustand durchgehend mit dem Bezugszeichen 11 beziffert - stets um ein flächiges Werkstück. Als solches muss die Brillenlinse 11 bei der Bearbeitung und Handhabung, insbesondere soweit dabei äußere Kräfte auf die Brillenlinse 11 wirken, zuverlässig gehalten und zugleich gegen unerwünschte Verformungen abgestützt werden. Zu diesem Zweck sind bei der hier beschriebenen Maschine 10 spezielle Maßnahmen getroffen, wie nachfolgend noch erläutert wird, die eine Bearbeitung der Brillenlinse 11 am Werkstückrand 14 und an der Rückseite 13 ohne die herkömmlicherweise hierfür als Halterung verwendeten Blockstücke gestatten und auch ohne die Brillenlinse 11 am Werkstückrand 14 zu halten.

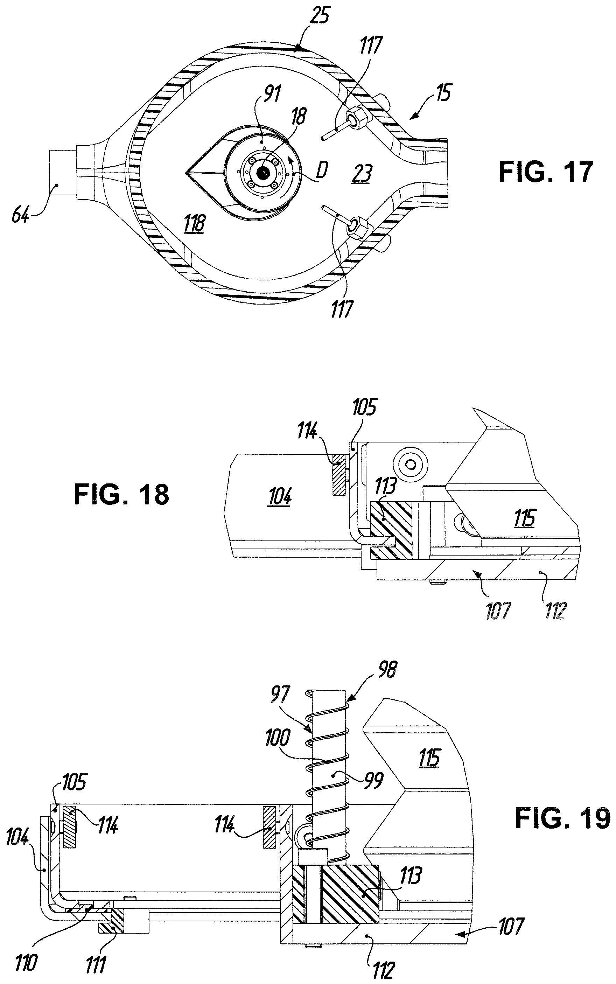

Allgemein gesprochen umfasst die Maschine 10 eine erste Bearbeitungsstation 15, eine zweite Bearbeitungsstation 16 und eine funktional zwischen der ersten Bearbeitungsstation 15 und der zweiten Bearbeitungsstation 16 angeordnete Bewegungseinrichtung 17 für die jeweils zu bearbeitende Brillenlinse 11. Während die nachfolgend insbesondere anhand der Fig. 10 bis 21 noch im Detail beschriebene erste Bearbeitungsstation 15 für eine spanende Bearbeitung der Brillenlinse 11 zur Formgebung des Werkstückrands 14 durch ein erstes Werkzeug mit geometrisch bestimmter Schneide (siehe den in den Fig. 16 und 17 gezeigten Fingerfräser 18) ausgestaltet ist, ist die zweite Bearbeitungsstation 16 für eine nasse spanende Bearbeitung der Brillenlinse 11 zur Formgebung der Rückseite 13 durch wenigstens ein zweites Werkzeug mit geometrisch bestimmter Schneide (vgl. das in Fig. 7 dargestellte Fräswerkzeug 19 sowie die in Fig. 1 und 6 angezogenen Drehmeißel 20) unter Zufuhr einer Kühlschmierflüssigkeit ausgestaltet.

Dabei entspricht die zweite Bearbeitungsstation 16 im Wesentlichen einem sogenannten "Generator", wie er von der Satisloh AG, Baar, Schweiz unter der Handelsbezeichnung "VFT-orbit" erhältlich und Gegenstand der Druckschrift EP 2 011 603 A1 ist, auf die an dieser Stelle bezüglich Aufbau und Funktion eines Generators zunächst ausdrücklich verwiesen sei. Hiervon unterscheidet sich die hier gezeigte zweite Bearbeitungsstation 16 allerdings insofern, als die Brillenlinse 11 ohne Zuhilfenahme eines Blockstücks als Halterung bei ihrer Bearbeitung in der zweiten Bearbeitungsstation 16 an einer speziellen Werkstück-Aufnahme 21 flächig abgestützt gehalten ist. Eine solche Werkstück-Aufnahme 21 ist Gegenstand der eingangs erwähnten Druckschriften WO 2023/066824 A1 oder EP 4 454 810 A1 und EP 4 450 220 A1, auf die hier hinsichtlich Aufbau und Funktion der Werkstück-Aufnahme 21 ausdrücklich verwiesen sei.

Die funktional zwischen der ersten Bearbeitungsstation 15 und der zweiten Bearbeitungsstation 16 angeordnete Bewegungseinrichtung 17 dient insbesondere dazu, an der jeweiligen ersten oder zweiten Bearbeitungsstation 15, 16 einen Werkstück-Haltekopf 22 (nur in den Fig. 12, 13 und 16 zu sehen) zu positionieren, der ebenfalls angepasst ist, die Brillenlinse 11 ohne Zuhilfenahme eines Blockstücks zu halten. Ein solcher Werkstück-Haltekopf 22 ist Gegenstand der eingangs erwähnten Druckschrift WO 2023/073249 A1, auf die an dieser Stelle hinsichtlich Aufbau und Funktion des Werkstück-Haltekopfs 22 ebenfalls ausdrücklich verwiesen sei.

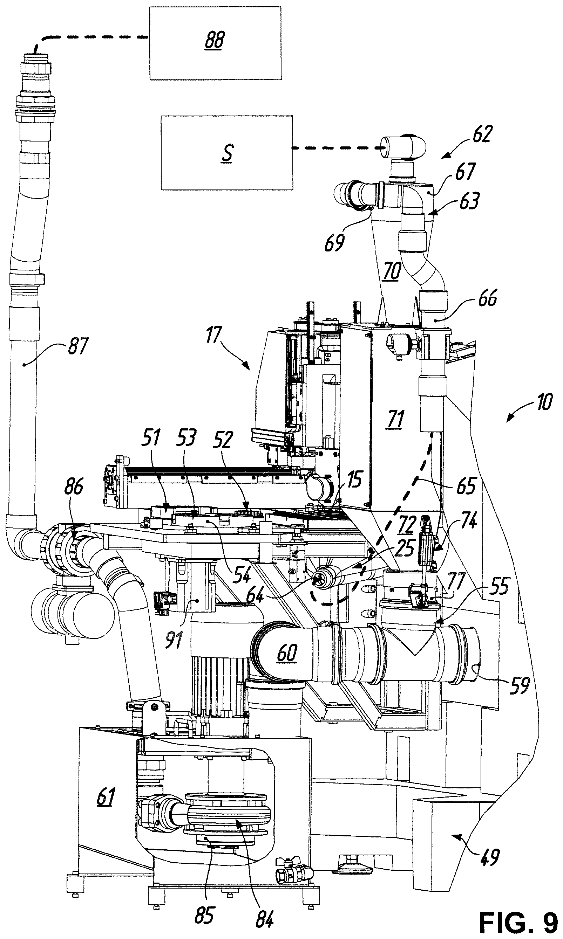

Wie nachfolgend noch im Einzelnen erläutert wird, besteht eine Besonderheit der Maschine 10 darin, dass die ersten und zweiten Bearbeitungsstationen 15, 16 der Maschine 10 klar voneinander getrennte erste und zweite Arbeitsräume 23, 24 aufweisen, die jeweils gegenüber der Umgebung gekapselt sind (siehe insbesondere die Fig. 12, 16 und 17 zum ersten Arbeitsraum 23 sowie die Fig. 5 und 7 zum zweiten Arbeitsraum 24). Dabei weist die erste Bearbeitungsstation 15 ein den ersten Arbeitsraum 23 eigens begrenzendes Gehäuse 25 auf (vgl. die Fig. 9 bis 13 und 15 bis 17) und ist für eine im Wesentlichen - siehe hierzu die weiter oben gemachten Bemerkungen - trockene, spanende Bearbeitung der Brillenlinse 11 am Werkstückrand 14 angepasst, wie im Folgenden ebenfalls noch im Detail beschrieben wird.

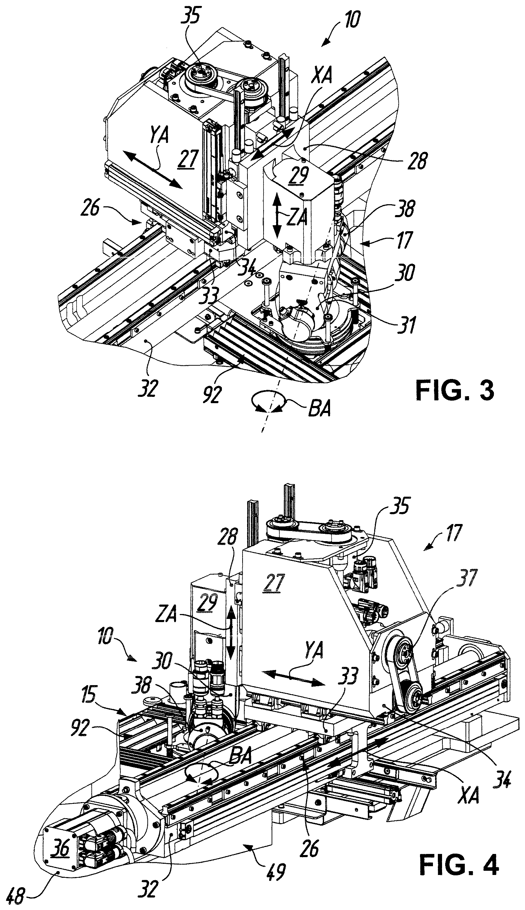

Einzelheiten der Bewegungseinrichtung 17 sind insbesondere den Detaildarstellungen gemäß den Fig. 3 und 4 zu entnehmen. Demnach ist die Bewegungseinrichtung 17 allgemein angepasst, den Werkstück-Haltekopf 22 in wenigstens drei linearen, senkrecht zueinander stehenden Achsrichtungen XA, YA, ZA zu bewegen, um in der ersten Bearbeitungsstation 15 die für die Randbearbeitung erforderlichen Zustell- und Vorschubbewegungen zu erzeugen, zwischen der ersten Bearbeitungsstation 15 und der zweiten Bearbeitungsstation 16 einen Transport der am Werkstück-Haltekopf 22 gehaltenen Brillenlinse 11 zu ermöglichen und in der zweiten Bearbeitungsstation 16 eine positionierte Übergabe der Brillenlinse 11 an die Werkstück-Aufnahme 21 zu gestatten. Außerdem ist die Bewegungseinrichtung 17 angepasst, den Werkstück-Haltekopf 22 um wenigstens eine Schwenkachse BA zu verschwenken, die quer zu der Achsrichtung ZA verläuft.

Genauer gesagt weist gemäß den Fig. 3 und 4 die Bewegungseinrichtung 17 ein auf einer Kreuztischanordnung 26 geführtes Portal 27 mit einem Vertikalschlitten 28 auf, an dem eine Konsole 29 befestigt ist. An der Konsole 29 ist eine Schwenkgabel 30 für ein Joch 31 montiert, das den Werkstück-Haltekopf 22 trägt. Die Kreuztischanordnung 26 umfasst eine Basis 32, einen ersten Horizontalschlitten 33 und einen mit dem Portal 27 einstückigen zweiten Horizontalschlitten 34, die übereinander angeordnet sind. Der erste Horizontalschlitten 33 ist über ein Paar horizontal verlaufender erster Führungsschienen und zugeordneten Wagen an der Basis 32 in der Achsrichtung XA geführt, während das Portal 27 mit dem zweiten Horizontalschlitten 34 über ein Paar quer zu den ersten Führungsschienen und ebenfalls horizontal verlaufender Führungsschienen und zugeordneten Wagen auf dem ersten Horizontalschlitten 33 in der Achsrichtung YA geführt ist. Auf der den ersten und zweiten Bearbeitungsstationen 15, 16 zugewandten Seite des Portals 27 ist der Vertikalschlitten 28 über ein Paar vertikal verlaufender Führungsschienen und zugeordneten Wagen am Portal 27 in der Achsrichtung ZA geführt.

Jedem der Schlitten 28, 33, 34 ist ein Antrieb 35, 36, 37, z.B. jeweils ein Schrittmotor mit einem ggf. zahnriemengetriebenen Kugelgewindetrieb, zugeordnet, über den der jeweilige Schlitten 28, 33, 34 lagegeregelt linear verschiebbar ist (Linearachsen XA, YA, ZA). Der Antrieb des den Werkstück-Haltekopf 22 tragenden Jochs 31 um die Schwenkachse BA erfolgt mittels eines winkellagegeregelten Direktantriebs 38 an der Schwenkgabel 30. Die für die Achsbewegungen (XA, YA, ZA, BA) jeweils erforderliche Sensorik (Drehgeber, Längenmesssystem, etc.) ist in den Figuren nur teilweise gezeigt und bedarf für den Fachmann auch keiner näheren Erläuterung.

Details der zweiten Bearbeitungsstation 16 der Maschine 10 sind insbesondere den Fig. 1, 2 und 5 bis 7 zu entnehmen. Demgemäß umfasst die zweite Bearbeitungsstation 16 eine Werkstückspindel 39, mittels der die an der Werkstück-Aufnahme 21 abgestützt gehaltene Brillenlinse 11 um eine Werkstück-Drehachse B drehend angetrieben werden kann. Ferner hat die zweite Bearbeitungsstation 16 im dargestellten Ausführungsbeispiel drei Bearbeitungseinheiten für die spanende Bearbeitung der an der Werkstückspindel 39 über die Werkstück-Aufnahme 21 gehaltenen Brillenlinse 11, nämlich zwei Dreh-Bearbeitungseinheiten 40, 41 mit jeweils einem Fast-Tool-Servo 42, 43, der dazu dient, eine Linearbewegung in Richtung F1 bzw. F2 für den jeweils zugeordneten Drehmeißel 20 als Drehwerkzeug zu erzeugen, sowie eine Fräs-Bearbeitungseinheit 44 mit einer Werkzeugspindel 45 zur Erzeugung einer Drehbewegung um eine Werkzeug-Drehachse C für das Fräswerkzeug 19.

Darüber hinaus weist die zweite Bearbeitungsstation 16 einen allgemein mit 46 bezifferten Verstellmechanismus zur Erzeugung einer Relativbewegung zwischen der Werkstückspindel 39 und dem jeweiligen Werkzeug 19, 20 auf, um (wenigstens) wahlweise ein Laden/Entladen oder ein spanendes Bearbeiten der Brillenlinse 11 zu ermöglichen. Hierbei umfasst der Verstellmechanismus 46 eine Linearantriebseinheit sowie eine Schwenkantriebseinheit (beide in den Figuren nicht näher zu sehen bzw. in Fig. 7 nicht geschnitten gezeigt), die aufeinander angeordnet sind, wobei die Werkstückspindel 39 mittels der Schwenkantriebseinheit um eine Schwenkachse A schwenkbar ist, die im Wesentlichen senkrecht zur Werkstück-Drehachse B steht, während die Werkstückspindel 39 mittels der Linearantriebseinheit entlang einer Linearachse Y bewegbar ist, die im Wesentlichen senkrecht zur Schwenkachse A und im Wesentlichen parallel zur Werkstück-Drehachse B verläuft.

Der Verstellmechanismus 46 ist im Zentrum einer ringtrogartigen Ausnehmung 47 angeordnet, die ausgehend von einer Oberseite 48 mittig in einem Maschinengestell 49 ausgebildet ist und den zweiten Arbeitsraum 24 der zweiten Bearbeitungsstation 16 der Maschine 10 nach unten begrenzt. Um die Ausnehmung 47 herum sind, wie insbesondere die Fig. 6 zeigt, ausgehend von der Oberseite 48 mehrere Flanschflächen in das Maschinengestell 49 eingelassen, welche der Montage der Bearbeitungseinheiten 40, 41, 44 in einer sternartigen Anordnung um den zweiten Arbeitsraum 24 herum dienen. Unmittelbar an der Ausnehmung 47 im Maschinengestell 49 befindet sich gemäß den Fig. 1 und 6 noch eine Messstation 50 zum Vermessen der Brillenlinsen 11, insbesondere für eine Kalibrierung der Maschine 10.

Insbesondere die Fig. 1, 2 und 6 zeigen schließlich als weitere Bestandteile der Maschine 10 ebenfalls die folgenden Baugruppen:
(a) Eine Imagingstation 51 zum Festlegen und Bestimmen von Ort und Lage des Brillenlinsenrohlings 11 im Raum;
(b) eine weitere Messstation 52 zur Vermessung des am Werkstück-Haltekopf 22 gehaltenen Brillenlinsenrohlings 11 an der Frontseite 12, um die Frontseiten-Geometrie des Brillenlinsenrohlings 11 zu erfassen;
(c) einen Werkstückspeicher 53 mit einem Drehkarussell 54 zum Zwischenspeichern von Brillenlinsenrohlingen 11; und
(d) auf der Rückseite der Maschine 10 eine nachfolgend noch näher erläuterte Spanabfuhreinrichtung 55, an der beide der ersten und zweiten Arbeitsräume 23, 24 der ersten und zweiten Bearbeitungsstationen 15, 16 angeschlossen sind.

Die Bewegungseinrichtung 17 ist dabei insgesamt in der Lage, zu bearbeitende/bearbeitete Brillenlinsen 11 mit ihrem Werkstück-Haltekopf 22 zwischen der Imagingstation 51, der Messstation 52, der ersten Bearbeitungsstation 15 und der Werkstück-Aufnahme 21 an der Werkstückspindel 39 in der zweiten Bearbeitungsstation 16 der Maschine 10 zu transportieren und an der jeweiligen Stelle den dort jeweils gegebenen Bearbeitungs- und/oder Handhabungserfordernissen entsprechend definiert räumlich zu positionieren. Insbesondere kann eine definierte Übergabe der vermittels der Bewegungseinrichtung 17 im Raum eindeutig positionierten Brillenlinse 11 von dem Werkstück-Haltekopf 22 am schwenkbaren Joch 31 der Bewegungseinrichtung 17 an die Werkstück-Aufnahme 21 an der Werkstückspindel 39 in dem zweiten Arbeitsraum 24 der zweiten Bearbeitungsstation 16 erfolgen. Hierfür ist an der zweiten Bearbeitungsstation 16 ein wahlweise verschließbares Übergabefenster (in den Figuren nicht eigens gezeigt) in dem in den Fig. 5 und 6 mit dem Bezugszeichen 56 gekennzeichneten Wandungsbereich der zweiten Bearbeitungsstation 16 vorgesehen.

Was die weitere Kinematik der vorbeschriebenen Maschine 10 im Bereich der zweiten Bearbeitungsstation 16 angeht, ist noch festzuhalten, dass die Werkstückspindel 39 mittels des aus Linearantriebseinheit und Schwenkantriebseinheit bestehenden Verstellmechanismus 46 CNC-lagegeregelt (A-Achse, Y-Achse) in einer bezüglich der Schwenkachse A senkrecht verlaufenden Ebene bewegbar ist, während die an der Werkstück-Aufnahme 21 gehaltene Brillenlinse 11 im Drehwinkel CNC-lagegeregelt (B-Achse) um die Werkstück-Drehachse B drehbar ist. Somit kann die Brillenlinse 11 in der zweiten Bearbeitungsstation 16 von einer Bearbeitungseinheit oder Station zur nächsten Bearbeitungseinheit oder Station bewegt werden (A-Achse), bezüglich einer Bearbeitungseinheit oder Station quer zu dieser (A-Achse, ggf. mit Y-Achse kombiniert, insbesondere für Vorschubbewegungen) und/oder bezüglich einer Bearbeitungseinheit oder Station in Richtung auf diese zu bzw. von dieser weg (Y-Achse, insbesondere für Zustellbewegungen). Werkzeugseitig kann dabei das Fräswerkzeug 19 mittels der Werkzeugspindel 45 der Fräs-Bearbeitungseinheit 44 um die Werkzeug-Drehachse C in der Drehzahl gesteuert drehend angetrieben werden bzw. der jeweilige Drehmeißel 20 mittels des zugeordneten Fast-Tool-Servos 42, 43 entlang der jeweiligen Linearachse F1, F2 CNC-lagegeregelt und nach Maßgabe der an der Brillenlinse 11 zu erzeugenden Flächenform reziprozierend zugestellt werden, um Späne abzuheben.

Weitere Einzelheiten der Spanabfuhreinrichtung 55 der Maschine 10 sind den Fig. 1, 2 und 5 bis 9 zu entnehmen. Was in diesem Zusammenhang zunächst die "nasse" Bearbeitung der Rückseite 13 der Brillenlinse 11 in der zweiten Bearbeitungsstation 16, d.h. im zweiten Arbeitsraum 24 der Maschine 10 angeht, ist am besten in der Fig. 5 zu erkennen, dass der zweite Arbeitsraum 24 an den jeweiligen Bearbeitungseinheiten 40, 41, 44 mit einer Vielzahl von Düsen 57 ausgerüstet ist, über die bei der Flächenbearbeitung der Brillenlinse 11 die Kühlschmierflüssigkeit in großer Menge zugeführt wird, um an der jeweiligen Eingriffsstelle zwischen Werkzeug und Werkstück zu schmieren und zu kühlen. Ein Eintrag von Kühlschmierflüssigkeit in den zweiten Arbeitsraum 24 in einer Menge von bis zu 50 Litern pro Minute ist dabei keine Seltenheit.

Schwerkraftbedingt sammelt sich die mit den Spänen und Abfallstücken aus der Bearbeitung verunreinigte Kühlschmierflüssigkeit in der Ausnehmung 47 des Maschinengestells 49. Um dabei auf jeden Fall ein Überlaufen der Kühlschmierflüssigkeit aus der Ausnehmung 47 in die bewegten Teile des Verstellmechanismus 46 zu verhindern, zweigt auf einer Höhe knapp unterhalb des am Maschinengestell 49 angeflanschten Verstellmechanismus 46 ein Überlauf 58 von der Ausnehmung 47 ab.

An einer bezüglich des Verstellmechanismus 46 zum Überlauf 58 diametral gegenüberliegenden, tiefsten Stelle der Ausnehmung 47 ist der zweite Arbeitsraum 24 mit einem Ablaufanschluss 59 versehen. Ausgehend von dem Ablaufanschluss 59 des zweiten Arbeitsraums 24 erstreckt sich ein Abflussrohr 60 mit einem geeigneten Gefälle bis zu einem in den Fig. 1, 2, 6 und 9 gezeigten Sammelbehälter 61 der Spanabfuhreinrichtung 55. Demgemäß können die infolge der Flächenbearbeitung in der zweiten Bearbeitungsstation 16 entstehenden Späne und Abfallstücke über den Ablaufanschluss 59 des zweiten Arbeitsraums 24 mit der Kühlschmierflüssigkeit in den Sammelbehälter 61 ausgeschwemmt werden.

Was die in der ersten Bearbeitungsstation 15 ablaufende, "im Wesentlichen trockene" Bearbeitung der Brillenlinsen 11 am Werkstückrand 14 angeht, weist die Spanabfuhreinrichtung 55 eine Absaugung 62 auf. Diese Absaugung 62 umfasst im dargestellten Ausführungsbeispiel eine Unterdruckquelle, beispielweise in der Form eines in Fig. 9 lediglich schematisch dargestellten, handelsüblichen Industriestaubsaugers S, und einen Spanabscheider 63. Der Spanabscheider 63 ist an dem Gehäuse 25 der ersten Bearbeitungsstation 15 angeschlossen, um Späne aus dem ersten Arbeitsraum 23 der ersten Bearbeitungsstation 15 abzusaugen.

Das Gehäuse 25 der ersten Bearbeitungsstation 15 hat hierfür wenigstens einen Ausgangsanschluss 64, wie z.B. die Fig. 9 zeigt, über den die Späne aus dem ersten Arbeitsraum 23 abgesaugt werden können, bevor sie über einen in Fig. 9 mit einer gestrichelten Linie angedeuteten, flexiblen Schlauch 65 bzw. Kanal 66 zum Spanabscheider 63 gelangen.

Der Spanabscheider 63 der Absaugung 62 ist im dargestellten Ausführungsbeispiel als Zyklonabscheider ausgestaltet, wie in den Fig. 7 und 8 gezeigt. Der Zyklonabscheider umfasst ein Oberteil 67, in dem ein an die Unterdruckquelle S der Absaugung 62 angeschlossenes, zentrales Tauchrohr 68 mündet und das mit einem an dem ersten Arbeitsraum 23 der ersten Bearbeitungsstation 15 über die vorerwähnte Verbindung (Schlauch 65 bzw. Kanal 66) angeschlossenen, umfangsseitigen Eingangsanschluss 69 versehen ist, ein sich an das Oberteil 67 anschließendes, konisches Unterteil 70, das in eine Entspannungskammer 71 übergeht, und einen die Entspannungskammer 71 nach unten abschließenden Spänesammler 72.

Wie am besten in der Fig. 8 zu erkennen ist, weist der Spänesammler 72 des Spanabscheider 63 eine Klappe 73 auf, die mittels eines Klappenantriebs 74 wahlweise geöffnet werden kann, um den Spänesammler 72 zu entleeren. Dabei ist die Klappe 73 vermittels einer umlaufenden Dichtung 75 gegenüber einem unteren Auslassflansch 76 des Spänesammlers 72 abgedichtet.

Wie aus der Schnittansicht gemäß Fig. 8 ferner ersichtlich ist, ist unterhalb des Auslassflanschs 76 ein Verbindungsrohr 77 zum Abflussrohr 60 hin vorgesehen. Das Verbindungsrohr 77 hat eine Aussparung, durch die ein von der Klappe 73 abgewinkelter Hebelfortsatz 78 der Klappe 73 aus dem Verbindungsrohr 77 heraussteht. Die Klappe 73 ist über den Hebelfortsatz 78 an einem Scharnier, das im Bereich der Aussparung am Auslassflansch 76 angeordnet ist, um eine Scharnierachse 79 schwenkbar gelagert. Am Hebelfortsatz 78 ist ferner ein Gelenk 80 vorgesehen, an dem eine Kolbenstange 81 eines den Klappenantrieb 74 bildenden pneumatischen Aktuators 82 angreift. Die von der Kolbenstange 81 abgewandte Seite des pneumatischen Aktuators 82 ist zur Krafteinleitung über ein weiteres Gelenk 83 an einer Wandung des Spänesammlers 72 angelenkt.

Aus der obigen Beschreibung ist ersichtlich, dass der Spanabscheider 63 der Absaugung 62 mit dem Sammelbehälter 61 verbunden werden kann. Der Spänesammler 72 des Spanabscheiders 63 kann nämlich in das Abflussrohr 60 zwischen dem Ablaufanschluss 59 des zweiten Arbeitsraums 24 und dem Sammelbehälter 61 der Spanabfuhreinrichtung 55 entleert werden, indem die Klappe 73 vermittels des Klappenantriebs 74 geöffnet wird.

Wie des Weiteren die Fig. 9 im Bereich des Ausbruchs im Sammelbehälter 61 der Spanabfuhreinrichtung 55 zeigt, ist im Sammelbehälter 61 eine Schredderpumpe 84 angeordnet, deren Pumpenkopf 85 mit einem Schneidwerk (nicht näher gezeigt) zum Zerkleinern der Späne ausgerüstet ist. Die Schredderpumpe 84 im Sammelbehälter 61 kann über ein automatisiert schaltbares Ventil 86 mit einer Förderstrecke 87 für verunreinigte Kühlschmierflüssigkeit verbunden werden. Diese Förderstrecke 87 endet schließlich in einer in Fig. 9 lediglich schematisch gezeigten, herkömmlichen Aufbereitungsanlage 88 für verunreinigte Kühlschmierflüssigkeit.

Weitere Einzelheiten der ersten Bearbeitungsstation 15 sind den Fig. 10 bis 21 zu entnehmen. Wie weiter oben schon erwähnt, ist die erste Bearbeitungsstation 15 für eine im Wesentlichen trockene spanende Bearbeitung der Brillenlinse 11 zur Formgebung des Werkstückrands 14 durch das erste Werkzeug 18 (Fingerfräser) mit geometrisch bestimmter Schneide ausgestaltet. Hierfür besitzt das Gehäuse 25 der ersten Bearbeitungsstation 15 gemäß Fig. 16 eine von einem Flanschabschnitt 89 umgebene Öffnung 90, durch die eine am Flanschabschnitt 89 angeflanschte Spindel 91 der ersten Bearbeitungsstation 15 mit einer drehend antreibbaren Werkzeugaufnahme für das erste Werkzeug 18 in den ersten Arbeitsraum 23 hineinragt. Mittels der Spindel 91 kann das erste Werkzeug 18 um eine weitere Werkzeug-Drehachse D in der Drehzahl gesteuert drehend angetrieben werden.

Diese Bearbeitungseinheit (Frässpindel 91 mit Fingerfräser 18 der ersten Bearbeitungsstation 15) dient dazu, am Brillenlinsenrohling 11 mittels des Fingerfräsers 18 eine umlaufende Nut, Stufe oder einen umlaufenden Einstich in der Frontseite 12 im Wesentlichen trocken auszubilden, bevor später in der zweiten Bearbeitungsstation 16 die Bearbeitung der Rückseite 13 der dort an der Werkstück-Aufnahme 21 gehaltenen Brillenlinse 11 beginnt. Dieses Vorgehen zum Vor- bzw. Fertigranden bei der Bearbeitung von Brillenlinsen 11 ist in der eingangs schon diskutierten Druckschrift WO 2023/046937 A1 ausführlich beschrieben, auf die an dieser Stelle bezüglich der Verfahrensdetails ausdrücklich verwiesen sei.

Das Gehäuse 25 der ersten Bearbeitungsstation 15 ist ferner auf einer dem ersten Werkzeug 18 gegenüberliegenden Seite mit einer Arbeitsraumabdeckung 92 abgedeckt, mittels der der erste Arbeitsraum 23 von der Umgebung trennbar ist, wie am besten in den Fig. 10 bis 12 und 16 zu sehen ist. Wie ebenfalls aus den Fig. 12 bzw. 16 zu erkennen ist, ist die Arbeitsraumabdeckung 92 am Gehäuse 25 der erste Bearbeitungsstation 15 variabel ausgestaltet und weist zum Ankoppeln des Werkstück-Haltekopfs 22 eine bezüglich des ersten Arbeitsraums 23 bewegbare Schnittstelle 93 mit einem offenen Koppelteil 94 auf. Durch das Koppelteil 94 hindurch ist eine am Werkstück-Haltekopf 22 gehaltene Brillenlinse 11 in den ersten Arbeitsraum 23 eintauchbar, um mit dem ersten Werkzeug 18 in Bearbeitungseingriff zu kommen, wie in Fig. 16 gezeigt.

Die Fig. 12 und 16 zeigen des Weiteren, dass das Koppelteil 94 der Schnittstelle 93 eine konisch geformte Innenumfangsfläche 95 aufweist, während der Werkstück-Haltekopf 22 einen Flanschabschnitt 96 hat, der außenumfangsseitig zur konisch geformten Innenumfangsfläche 95 des Koppelteils 94 komplementär konisch ausgebildet ist, so dass beim Ankoppeln des Werkstück-Haltekopfs 22 an die Schnittstelle 93 eine Selbstzentrierung zwischen dem Koppelteil 94 und dem Flanschabschnitt 96 erfolgt.

Wie in den Fig. 10 bis 16 und 20 durch Bewegungspfeile angedeutet, ist das Koppelteil 94 der Schnittstelle 93 bezüglich des ersten Arbeitsraums 23 in einer durch eine erste Richtung R1 und eine dazu quer verlaufende zweite Richtung R2 an der variablen Arbeitsraumabdeckung 92 gebildeten Ebene sowie einer quer zu dieser Ebene verlaufenden dritten Richtung R3 bewegbar angeordnet. Eine Führungsanordnung 97 sorgt dabei dafür, dass das Koppelteil 94 der Schnittstelle 93 bei einer Bewegung in der dritten Richtung R3 geführt ist, wobei das Koppelteil 94 durch eine Federanordnung 98 von dem ersten Arbeitsraum 23 weg in der dritten Richtung R3 federvorgespannt ist.

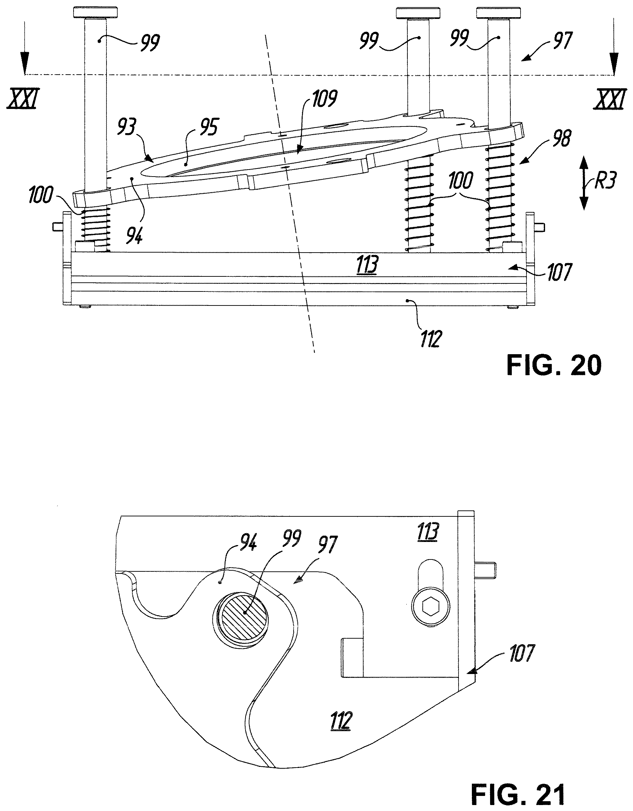

Im dargestellten Ausführungsbeispiel weist die Führungsanordnung 97 drei Führungsstangen 99 auf, wie in den Fig. 14 und 20 zu sehen ist, auf denen jeweils eine Schraubendruckfeder 100 der Federanordnung 98 aufgenommen ist. Die Anordnung ist dabei so getroffen, dass das Koppelteil 94 der Schnittstelle 93 an der Führungsanordnung 97 bezüglich der durch die ersten und zweiten Richtungen R1, R2 gebildeten Ebene auch verkippbar geführt ist, wie in Fig. 20 gezeigt. Hierfür sind gemäß Fig. 21 die Führungsbohrungen im Koppelteil 94 mit einem gegenüber dem Außendurchmesser der Führungsstangen 99 größeren Innendurchmesser ausgebildet. Das so geschaffene Spiel ermöglicht es, das Koppelteil 94 für eine prismatische Bearbeitung von Brillenlinsen 11 zu verkippen, ohne dabei die Führung in störender Weise zu beeinflussen.

Die variable Arbeitsraumabdeckung 92 besitzt gemäß insbesondere den Fig. 10 bis 12 ferner eine Arretiereinrichtung 101 für das Koppelteil 94 der Schnittstelle 93, mit wenigstens einem, im dargestellten Ausführungsbeispiel zwei - hier laschenförmigen - Verriegelungselementen 102, die wahlweise von einer Arretierposition für das Koppelteil 94 (Fig. 10 und 12) in eine Freigabeposition für das Koppelteil 94 (Fig. 11) bewegbar sind und umgekehrt. Dabei sind die Verriegelungselemente 102 angepasst, in ihrer Arretierposition das Koppelteil 94 in einer definierten Parkstellung zu halten, in der die das Koppelteil 94 vorspannende Federanordnung 98 komprimiert ist, und in ihrer Freigabeposition vom Koppelteil 94 außer Eingriff zu sein, so dass das Koppelteil 94 in Arbeitsstellungen unter Vorspannung durch die Federanordnung 98 an der Führungsanordnung 97 geführt bewegbar ist. Zum Halten der Arretierposition dienen im dargestellten Ausführungsbeispiel Schrauben an den Verriegelungselementen 102, deren Köpfe mit zugeordneten Bohrungen im Koppelteil in Eingriff kommen können, wie in Fig. 12 gezeigt.

Die variable Arbeitsraumabdeckung 92 weist gemäß insbesondere den Fig. 10 bis 12 und 14 des Weiteren eine Faltenbalganordnung 103 auf, umfassend einen am Gehäuse 25 der ersten Bearbeitungsstation 15 fest angeschlossenen (vgl. Fig. 12) äußeren Rahmen 104, einem im äußeren Rahmen 104 in der ersten Richtung R1 gleitfähig geführten mittleren Rahmen 105, der auf in der ersten Richtung R1 gegenüberliegenden Seiten über jeweils einen flächigen Faltenbalg 106 mit dem äußeren Rahmen 104 verbunden ist, und einem im mittleren Rahmen 105 in der zur ersten Richtung R1 quer verlaufenden zweiten Richtung R2 gleitfähig geführten inneren Rahmen 107, der auf in der zweiten Richtung R2 gegenüberliegenden Seiten über jeweils einen flächigen Faltenbalg 108 mit dem mittleren Rahmen 105 verbunden ist. Dabei ist der innere Rahmen 107 mit einer Öffnung 109 für einen Durchgriff des Werkstück-Haltekopf 22 in den ersten Arbeitsraum 23 hinein versehen und trägt die Schnittstelle 93 für den Werkstück-Haltekopf 22.

Genauer gesagt sind der äußere Rahmen 104 und der mittlere Rahmen 105 jeweils aus einem einstückigen Blech gefertigt und weisen einen sich in horizontaler Richtung, also in einer durch die Richtungen R1 und R2 gebildeten Ebene erstreckenden rechteckigen Bodenabschnitt auf, an dessen parallel zu den ersten und zweiten Richtungen R1, R2 verlaufenden Rändern sich in vertikaler Richtung R3 erstreckende Randabschnitte anschließen, die durch Aufkantungen gebildet sind. Um einen Durchgriff von oben in den ersten Arbeitsraum 23 zu ermöglichen, weist der Bodenabschnitt des jeweiligen Rahmens 104, 105 eine zentrale Aussparung auf.

Unter den in der ersten Richtung R1 verlaufenden Bereichen des mittleren Rahmens 105 sind Gleitscheiben 110 angeordnet, über die der mittlere Rahmen 105 gleitend auf dem Bodenabschnitt des äußeren Rahmens 104 aufliegt. Zum Schutz gegen ein Abheben des mittleren Rahmens 105 vom äußeren Rahmen 104 und zur Führung des mittleren Rahmens 105 im äußeren Rahmen 104 sind unter dem mittleren Rahmen 105 zwei Führungsleisten 111 mit einer L-förmigen Führungskontur vorgesehen, die mit einem bestimmten Spiel bezüglich der Kanten der Aussparung im äußeren Rahmen 104 ausgerichtet sind und den äußeren Rahmen 104 durch die Aussparung hindurch hintergreifen.

Der innere Rahmen 107 besteht aus einem ebenfalls in der horizontalen Ebene liegenden, rechteckigen Deckblech 112, in dem mittig die Öffnung 109 für den Durchgriff des Werkstück-Haltekopf 22 ausgebildet ist. Auf der Oberseite des Deckblechs 112, an den zur Richtung R2 parallelen Seiten, ist jeweils eine Führungsschiene 113 aus einem gleitfähigen Werkstoff mit einer Nut aufgeschraubt, die so ausgebildet ist, dass der innere Rahmen 107 vermittels der Nut an dem Bodenabschnitt des mittleren Rahmens 105 entlang des Ausschnitts im mittleren Rahmen 105 in der zweiten Richtung R2 geführt ist. Zur klemmenden Befestigung der die Rahmen 104, 105, 107 gegeneinander abdichtenden flächigen Faltenbälge 106, 108 sind schließlich Klemmleisten 114 vorgesehen, wie aus den Schnittdarstellungen gemäß den Fig. 12, 18 und 19 ersichtlich.

Darüber hinaus weist die Faltenbalganordnung 103 einen im Wesentlichen hohlzylindrischen Faltenbalg 115 auf, der den ersten Arbeitsraum 23 gegenüber der Umgebung abdichtend zwischen dem Koppelteil 94 der Schnittstelle 93 und dem inneren Rahmen 107 angeordnet ist, wie in Fig. 12 gezeigt.

Zu dem zweckmäßig aus einem Kunststoff mit ggf. elektrisch leitfähigen, antistatischen oder statisch ableitenden Eigenschaften spritzgegossenen oder durch eine additive Fertigung hergestellten Gehäuse 25 der ersten Bearbeitungsstation 15 ist schließlich noch zu sagen, dass, wie in Fig. 16 gut zu erkennen ist, das Gehäuse 25 mindestens einen Eingangsanschluss 116 aufweist, über den in den ersten Arbeitsraum 23 insbesondere Umgebungsluft passiv angesaugt oder aktiv zugeführt werden kann. Ferner ist an dem Gehäuse 25 wenigstens eine, im dargestellten Ausführungsbeispiel zwei Düsen 117 für Druckluft angebracht, die auf das erste Werkzeug 18 für die im Wesentlichen trockene spanende Formgebung des Werkstückrands 14 fest gerichtet sind oder variabel gerichtet werden können, um eine Spanstelle zwischen dem Werkstück 11 und dem ersten Werkzeug 18 auszublasen und zu kühlen. Diese Düsen 117 sind in den Fig. 16 und 17 dargestellt.

Insgesamt ist das Gehäuse 25 der ersten Bearbeitungsstation 15 im Hinblick auf eine unbehinderte Abfuhr von Spänen strömungstechnisch optimiert gestaltet, ohne Hinterschnitte und ohne Ecken im ersten Arbeitsraum 23. Dabei ist das Gehäuse 25 an seinen den ersten Arbeitsraum 23 begrenzenden Oberflächen 118 zweckmäßig geglättet ausgebildet.

Eine Maschine zur spanenden Bearbeitung von insbesondere Brillenlinsen aus Kunststoff, mit zwei Werkstückflächen und einem Werkstückrand dazwischen, umfasst eine erste Bearbeitungsstation für eine spanende Bearbeitung einer Brillenlinse am Werkstückrand durch ein erstes Werkzeug, eine zweite Bearbeitungsstation für eine nasse spanende Bearbeitung der Brillenlinse an einer der Werkstückflächen durch ein zweites Werkzeug, und eine funktional zwischen den Bearbeitungsstationen angeordnete Bewegungseinrichtung zum Positionieren eines Werkstück-Haltekopfs an der jeweiligen Bearbeitungsstation, der das Werkstück ohne Blockstück zu halten vermag. Dabei weisen die Bearbeitungsstationen voneinander getrennte erste und zweite Arbeitsräume auf, die jeweils gegenüber der Umgebung gekapselt sind. Die erste Bearbeitungsstation hat ferner ein den ersten Arbeitsraum eigens begrenzendes Gehäuse und ist für eine im Wesentlichen trockene Bearbeitung des Werkstücks am Werkstückrand angepasst.

### BEZUGSZEICHENLISTE

- 10: Maschine
- 11: Werkstück / Brillenlinse / Brillenlinsenrohling
- 12: Werkstückfläche / Frontseite
- 13: Werkstückfläche / Rückseite
- 14: Werkstückrand
- 15: erste Bearbeitungsstation
- 16: zweite Bearbeitungsstation
- 17: Bewegungseinrichtung
- 18: erstes Werkzeug / Fingerfräser
- 19: zweites Werkzeug / Fräswerkzeug
- 20: zweites Werkzeug / Drehmeißel
- 21: Werkstück-Aufnahme
- 22: Werkstück-Haltekopf
- 23: erster Arbeitsraum
- 24: zweiter Arbeitsraum
- 25: Gehäuse
- 26: Kreuztischanordnung
- 27: Portal
- 28: Vertikalschlitten
- 29: Konsole
- 30: Schwenkgabel
- 31: Joch
- 32: Basis
- 33: erster Horizontalschlitten
- 34: zweiter Horizontalschlitten
- 35: Antrieb für den Vertikalschlitten
- 36: Antrieb für den ersten Horizontalschlitten
- 37: Antrieb für den zweiten Horizontalschlitten
- 38: Direktantrieb für das Joch
- 39: Werkstückspindel
- 40: Dreh-Bearbeitungseinheit
- 41: Dreh-Bearbeitungseinheit
- 42: Fast-Tool-Servo
- 43: Fast-Tool-Servo
- 44: Fräs-Bearbeitungseinheit
- 45: Werkzeugspindel
- 46: Verstellmechanismus
- 47: Ausnehmung
- 48: Oberseite
- 49: Maschinengestell
- 50: Messstation
- 51: Imagingstation
- 52: Messstation
- 53: Werkstückspeicher
- 54: Drehkarussell
- 55: Spanabfuhreinrichtung
- 56: Wandungsbereich
- 57: Düse
- 58: Überlauf
- 59: Ablaufanschluss
- 60: Abflussrohr
- 61: Sammelbehälter
- 62: Absaugung
- 63: Spanabscheider
- 64: Ausgangsanschluss
- 65: Schlauch
- 66: Kanal
- 67: Oberteil
- 68: Tauchrohr
- 69: Eingangsanschluss
- 70: konisches Unterteil
- 71: Entspannungskammer
- 72: Spänesammler
- 73: Klappe
- 74: Klappenantrieb
- 75: Dichtung
- 76: Auslassflansch
- 77: Verbindungsrohr
- 78: Hebelfortsatz
- 79: Scharnierachse
- 80: Gelenk
- 81: Kolbenstange
- 82: pneumatischer Aktuator
- 83: Gelenk
- 84: Schredderpumpe
- 85: Pumpenkopf
- 86: Ventil
- 87: Förderstrecke
- 88: Aufbereitungsanlage
- 89: Flanschabschnitt
- 90: Öffnung
- 91: Spindel
- 92: Arbeitsraumabdeckung
- 93: Schnittstelle
- 94: Koppelteil
- 95: Innenumfangsfläche
- 96: Flanschabschnitt
- 97: Führungsanordnung
- 98: Federanordnung
- 99: Führungsstange
- 100: Schraubendruckfeder
- 101: Arretiereinrichtung
- 102: Verriegelungselement
- 103: Faltenbalganordnung
- 104: äußerer Rahmen
- 105: mittlerer Rahmen
- 106: flächiger Faltenbalg
- 107: innerer Rahmen
- 108: flächiger Faltenbalg
- 109: Öffnung
- 110: Gleitscheibe
- 111: Führungsleiste
- 112: Deckblech
- 113: Führungsschiene
- 114: Klemmleiste
- 115: hohlzylindrischer Faltenbalg
- 116: Eingangsanschluss
- 117: Düse
- 118: Oberfläche

- A: Schwenkachse Werkstück-Aufnahme (winkellagegeregelt)
- B: Drehachse Werkstück-Aufnahme (winkellagegeregelt)
- BA: Schwenkachse Werkstück-Haltekopf (winkellagegeregelt)
- C: Werkzeug-Drehachse (drehzahlgesteuert)
- D: Werkzeug-Drehachse (drehzahlgesteuert)
- F1: Linearachse 1. Fast-Tool-Servo (lagegeregelt)
- F2: Linearachse 2. Fast-Tool-Servo (lagegeregelt)
- R1: erste Richtung
- R2: zweite Richtung
- R3: dritte Richtung
- S: Unterdruckquelle
- XA: Linearachse Werkstück-Haltekopf (lagegeregelt)
- Y: Linearachse Werkstück-Aufnahme (lagegeregelt)
- YA: Linearachse Werkstück-Haltekopf (lagegeregelt)
- ZA: Linearachse Werkstück-Haltekopf (lagegeregelt)

## Patentansprüche

1. Maschine (10) zur spanenden Bearbeitung von optischen Werkstücken (11) aus Kunststoff, insbesondere Brillenlinsen, die jeweils zwei Werkstückflächen (12, 13) und einen Werkstückrand (14) dazwischen aufweisen, mit
wenigstens einer ersten Bearbeitungsstation (15), die für eine spanende Bearbeitung eines Werkstücks (11) zur Formgebung des Werkstückrands (14) durch mindestens ein erstes Werkzeug (18) mit geometrisch bestimmter Schneide ausgestaltet ist,
wenigstens einer zweiten Bearbeitungsstation (16), die für eine nasse spanende Bearbeitung des Werkstücks (11) zur Formgebung mindestens einer der Werkstückflächen (12, 13) durch wenigstens ein zweites Werkzeug (19, 20) mit geometrisch bestimmter Schneide unter Zufuhr einer Kühlschmierflüssigkeit ausgestaltet ist, und
einer funktional zwischen der wenigstens einen ersten Bearbeitungsstation (15) und der wenigstens einen zweiten Bearbeitungsstation (16) angeordneten Bewegungseinrichtung (17) zum Positionieren eines Werkstück-Haltekopfs (22) an der jeweiligen ersten oder zweiten Bearbeitungsstation (15, 16), der angepasst ist, das Werkstück (11) ohne Blockstück zu halten,
**dadurch gekennzeichnet, dass** die ersten und zweiten Bearbeitungsstationen (15, 16) der Maschine (10) voneinander getrennte erste und zweite Arbeitsräume (23, 24) aufweisen, die jeweils gegenüber der Umgebung gekapselt sind, wobei die erste Bearbeitungsstation (15) ein den ersten Arbeitsraum (23) eigens begrenzendes Gehäuse (25) aufweist und für eine im Wesentlichen trockene, spanende Bearbeitung des Werkstücks (11) am Werkstückrand (14) angepasst ist.

2. Maschine (10) nach Anspruch 1, **dadurch gekennzeichnet, dass** das Gehäuse (25) der ersten Bearbeitungsstation (15) auf einer dem ersten Werkzeug (18) gegenüberliegenden Seite mit einer variablen Arbeitsraumabdeckung (92) abgedeckt ist, mittels der der erste Arbeitsraum (23) von der Umgebung trennbar ist.

3. Maschine (10) nach Anspruch 2, **dadurch gekennzeichnet, dass** die variable Arbeitsraumabdeckung (92) am Gehäuse (25) der ersten Bearbeitungsstation (15) zum Ankoppeln des Werkstück-Haltekopfs (22) eine bezüglich des ersten Arbeitsraums (23) bewegbare Schnittstelle (93) mit einem offenen Koppelteil (94) aufweist, durch das hindurch ein am Werkstück-Haltekopf (22) gehaltenes Werkstück (11) in den ersten Arbeitsraum (23) eintauchbar ist, um mit dem ersten Werkzeug (18) in Bearbeitungseingriff zu kommen.

4. Maschine (10) nach Anspruch 3, **dadurch gekennzeichnet,**
**dass** das Koppelteil (94) der Schnittstelle (93) bezüglich des ersten Arbeitsraums (23) in einer durch eine erste Richtung (R1) und eine dazu quer verlaufende zweite Richtung (R2) an der variablen Arbeitsraumabdeckung (92) gebildeten Ebene sowie einer quer zu dieser Ebene verlaufenden dritten Richtung (R3) bewegbar angeordnet ist; und/oder
**dass** das Koppelteil (94) der Schnittstelle (93) eine konisch geformte Innenumfangsfläche (95) aufweist, während der Werkstück-Haltekopf (22) einen Flanschabschnitt (96) hat, der außenumfangsseitig zur konisch geformten Innenumfangsfläche (95) des Koppelteils (94) komplementär konisch ausgebildet ist, so dass beim Ankoppeln des Werkstück-Haltekopfs (22) an die Schnittstelle (93) eine Selbstzentrierung zwischen dem Koppelteil (94) und dem Flanschabschnitt (96) erfolgt.

5. Maschine (10) nach Anspruch 4, **dadurch gekennzeichnet, dass** das Koppelteil (94) der Schnittstelle (93) vermittels einer Führungsanordnung (97) bei einer Bewegung in der dritten Richtung (R3) geführt ist, wobei das Koppelteil (94) durch eine Federanordnung (98) von dem ersten Arbeitsraum (23) weg in der dritten Richtung (R3) federvorgespannt ist.

6. Maschine (10) nach Anspruch 5, **dadurch gekennzeichnet,**
**dass** das Koppelteil (94) der Schnittstelle (93) an der Führungsanordnung (97) bezüglich der durch die ersten und zweiten Richtungen (R1, R2) gebildeten Ebene verkippbar geführt ist; und/oder
**dass** die variable Arbeitsraumabdeckung (92) eine Arretiereinrichtung (101) für das Koppelteil (94) der Schnittstelle (93) aufweist, mit wenigstens einem Verriegelungselement (102), das wahlweise von einer Arretierposition für das Koppelteil (94) in eine Freigabeposition für das Koppelteil (94) bewegbar ist und umgekehrt, wobei das Verriegelungselement (102) angepasst ist, in seiner Arretierposition das Koppelteil (94) in einer definierten Parkstellung zu halten, in der die das Koppelteil (94) vorspannende Federanordnung (98) komprimiert ist, und in seiner Freigabeposition vom Koppelteil (94) außer Eingriff zu sein, so dass das Koppelteil (94) in Arbeitsstellungen unter Vorspannung durch die Federanordnung (98) an der Führungsanordnung (97) geführt bewegbar ist.

7. Maschine (10) nach einem der Ansprüche 4 bis 6, **dadurch gekennzeichnet, dass** die variable Arbeitsraumabdeckung (92) eine Faltenbalganordnung (103) aufweist, umfassend einen am Gehäuse (25) der ersten Bearbeitungsstation (15) fest angeschlossenen äußeren Rahmen (104), einem im äußeren Rahmen (104) in der ersten Richtung (R1) gleitfähig geführten mittleren Rahmen (105), der auf in der ersten Richtung (R1) gegenüberliegenden Seiten über jeweils einen flächigen Faltenbalg (106) mit dem äußeren Rahmen (104) verbunden ist, und einem im mittleren Rahmen (105) in der zur ersten Richtung (R1) quer verlaufenden zweiten Richtung (R2) gleitfähig geführten inneren Rahmen (107), der auf in der zweiten Richtung (R2) gegenüberliegenden Seiten über jeweils einen flächigen Faltenbalg (108) mit dem mittleren Rahmen (105) verbunden ist, wobei der innere Rahmen (107) mit einer Öffnung (109) für einen Durchgriff des Werkstück-Haltekopfs (22) in den ersten Arbeitsraum (23) hinein versehen ist und die Schnittstelle (93) für den Werkstück-Haltekopf (22) trägt.

8. Maschine (10) nach Anspruch 7, **dadurch gekennzeichnet, dass** die Faltenbalganordnung (103) ferner einen im Wesentlichen hohlzylindrischen Faltenbalg (115) aufweist, der den ersten Arbeitsraum (23) gegenüber der Umgebung abdichtend zwischen dem Koppelteil (94) der Schnittstelle (93) und dem inneren Rahmen (107) angeordnet ist.

9. Maschine (10) nach einem der vorhergehenden Ansprüche, **dadurch gekennzeichnet,**
**dass** das Gehäuse (25) der ersten Bearbeitungsstation (15) wenigstens einen Ausgangsanschluss (64) hat, über den aus dem ersten Arbeitsraum (23) insbesondere Späne absaugbar sind; und/oder
**dass** das Gehäuse (25) der ersten Bearbeitungsstation (15) mindestens einen Eingangsanschluss (116) aufweist, über den in den ersten Arbeitsraum (23) insbesondere Umgebungsluft passiv ansaugbar oder aktiv zuführbar ist; und/oder
**dass** das Gehäuse (25) der ersten Bearbeitungsstation (15) wenigstens eine von einem Flanschabschnitt (89) umgebene Öffnung (90) besitzt, durch die eine am Flanschabschnitt (89) angeflanschte Spindel (91) der ersten Bearbeitungsstation (15) mit einer drehend antreibbaren Werkzeugaufnahme für das erste Werkzeug (18) in den ersten Arbeitsraum (23) hineinragt; und/oder
**dass** an dem Gehäuse (23) der ersten Bearbeitungsstation (15) wenigstens eine Düse (117) für Druckluft angebracht ist, die auf das erste Werkzeug (18) für die im Wesentlichen trockene spanende Formgebung des Werkstückrands (14) fest gerichtet oder variabel richtbar ist, um eine Spanstelle zwischen dem Werkstück (11) und dem ersten Werkzeug (18) auszublasen und zu kühlen; und/oder
**dass** das Gehäuse (25) der ersten Bearbeitungsstation (15) im Hinblick auf eine unbehinderte Abfuhr von Spänen strömungstechnisch optimiert gestaltet ist, ohne Hinterschnitte und ohne Ecken im ersten Arbeitsraum (23); und/oder
**dass** das Gehäuse (25) der ersten Bearbeitungsstation (15) an seinen den ersten Arbeitsraum (23) begrenzenden Oberflächen (118) geglättet ausgebildet ist; und/oder
**dass** das Gehäuse (25) der ersten Bearbeitungsstation (15) aus einem Kunststoff mit ggf. elektrisch leitfähigen, antistatischen oder statisch ableitenden Eigenschaften spritzgegossen oder durch eine additive Fertigung hergestellt ist.

10. Maschine (10) nach einem der vorhergehenden Ansprüche, **gekennzeichnet durch** eine Spanabfuhreinrichtung (55), an der einer oder bevorzugt beide der ersten und zweiten Arbeitsräume (23, 24) der ersten und zweiten Bearbeitungsstationen (15, 16) angeschlossen ist/sind.

11. Maschine (10) nach Anspruch 10, **dadurch gekennzeichnet,**
**dass** die Spanabfuhreinrichtung (55) eine Absaugung (62) mit einem Spanabscheider (63) umfasst, welche an dem Gehäuse (25) der ersten Bearbeitungsstation (15) angeschlossen ist, um Späne aus dem ersten Arbeitsraum (23) abzusaugen; und/oder
**dass** die Spanabfuhreinrichtung (55) einen Sammelbehälter (61) umfasst, in den Späne über einen Ablaufanschluss (59) des zweiten Arbeitsraums (24) mit der Kühlschmierflüssigkeit ausschwemmbar sind.

12. Maschine (10) nach Anspruch 11, **dadurch gekennzeichnet,**
**dass** der Spanabscheider (63) der Absaugung (62) mit dem Sammelbehälter (61) verbindbar ist; und/oder
**dass** der Spanabscheider (63) der Absaugung (62) als Zyklonabscheider ausgestaltet ist, mit einem Oberteil (67), in dem ein an eine Unterdruckquelle (S) der Absaugung (62) anschließbares, zentrales Tauchrohr (68) mündet und das mit einem an dem ersten Arbeitsraum (23) angeschlossenen, umfangsseitigen Eingangsanschluss (69) versehen ist, mit einem sich an das Oberteil (67) anschließenden, konischen Unterteil (70), das in eine Entspannungskammer (71) übergeht, und mit einem die Entspannungskammer (71) nach unten abschließenden Spänesammler (72); und/oder
**dass** im Sammelbehälter (61) der Spanabfuhreinrichtung (55) eine Schredderpumpe (84) angeordnet ist, deren Pumpenkopf (85) mit einem Schneidwerk zum Zerkleinern der Späne ausgerüstet ist.

13. Maschine (10) nach Anspruch 12, **dadurch gekennzeichnet,**
**dass** der Spänesammler (72) des Spanabscheiders (63) eine Klappe (73) aufweist, die mittels eines Klappenantriebs (74) wahlweise zu öffnen ist, um den Spänesammler (72) zu entleeren, wobei die Klappe (73) vorzugsweise mittels einer umlaufenden Dichtung (75) gegenüber einem unteren Auslassflansch (76) des Spänesammlers (72) abgedichtet ist; und/oder
**dass** der Spänesammler (72) des Spanabscheiders (63) in ein Abflussrohr (60) zwischen dem Ablaufanschluss (59) des zweiten Arbeitsraums (24) und dem Sammelbehälter (61) der Spanabfuhreinrichtung (55) entleerbar ist; und/oder
**dass** die Schredderpumpe (84) im Sammelbehälter (61) über ein automatisiert schaltbares Ventil (86) mit einer Förderstrecke (87) für verunreinigte Kühlschmierflüssigkeit verbindbar ist.

14. Maschine (10) nach einem der vorhergehenden Ansprüche, **dadurch gekennzeichnet, dass** die Bewegungseinrichtung (17) angepasst ist, den Werkstück-Haltekopf (22) in wenigstens drei linearen, senkrecht zueinander stehenden Achsrichtungen (XA, YA, ZA) zu bewegen, um in der ersten Bearbeitungsstation (15) die für die Randbearbeitung erforderlichen Zustell- und Vorschubbewegungen zu erzeugen, zwischen der ersten Bearbeitungsstation (15) und der zweiten Bearbeitungsstation (16) einen Transport des am Werkstück-Haltekopf (22) gehaltenen Werkstücks (11) zu ermöglichen und in der zweiten Bearbeitungsstation (16) eine positionierte Übergabe des Werkstücks (11) zu gestatten.

15. Maschine (10) nach Anspruch 14, **dadurch gekennzeichnet, dass** die Bewegungseinrichtung (17) zudem angepasst ist, den Werkstück-Haltekopf (22) um wenigstens eine Schwenkachse (BA) zu verschwenken, die quer zu einer Achsrichtung (Z) der Achsrichtungen (X, Y, Z) verläuft.
